# EUROPÄISCHE PATENTSCHRIFT

(11) **EP 4 126 410 B1**
(45) Veröffentlichungstag und Bekanntmachung des Hinweises auf die Patenterteilung: **20.12.2023**
(21) Anmeldenummer: 21727352.3
(22) Anmeldetag: 01.04.2021
(51) Int. Cl.: B21D 13/06, B21D 13/08, B21D 13/10, B21D 28/10, B21D 47/00, B32B 3/12, B32B 3/28, B32B 5/02, B32B 5/18, B32B 15/04, B32B 15/085, B32B 15/10, B32B 15/12, B32B 15/14, B32B 15/18, B32B 21/04, B32B 21/06, B32B 21/08, B32B 21/10

(54) **ABSTANDSSTRUKTUR, SANDWICH-KONSTRUKTION MIT EINER SOLCHEN ABSTANDSSTRUKTUR UND VERFAHREN ZUR HERSTELLUNG EINER SOLCHEN ABSTANDSSTRUKTUR**
SPACER STRUCTURE, SANDWICH CONSTRUCTION WITH A SPACER STRUCTURE OF THIS KIND AND METHOD FOR PRODUCING A SPACER STRUCTURE OF THIS KIND
STRUCTURE D'ÉCARTEMENT, CONSTRUCTION EN SANDWICH POURVUE D'UNE TELLE STRUCTURE D'ÉCARTEMENT ET PROCÉDÉ DE FABRICATION D'UNE TELLE STRUCTURE D'ÉCARTEMENT

(30) Priorität: 01.04.2020 DE 102020109118
(43) Veröffentlichungstag der Anmeldung: 08.02.2023
(73) Patentinhaber: MATRIX Module GmbH, 44369 Dortmund (DE)
(72) Erfinder: SCHERFF, Maximilian, 44369 Dortmund (DE)
(74) Vertreter: adares Patent- und Rechtsanwälte Reininger & Partner GmbB
(86) Internationale Anmeldenummer: PCT/DE2021/100320
(87) Internationale Veröffentlichungsnummer: WO 2021/197549

(56) Entgegenhaltungen:
- FR-A- 1 045 315
- US-A- 3 111 204
- US-A1- 2005 167 088
- US-A1- 2006 246 312
- US-A1- 2018 309 004

## Beschreibung

Die Erfindung betrifft eine Abstandsstruktur, eine Sandwich-Konstruktion mit einer solchen Abstandsstruktur und Verfahren zur Herstellung einer solchen Abstandsstruktur.

Eine Sandwich-Konstruktion mit einer Abstandsstruktur, die für den Einsatz als strukturelles Bauteil in Fahrzeugen aller Art, wie beispielsweise Personenkraftwagen, Bussen, Bahn-Waggons, sowie für den konstruktiven Einsatz im Gebäudebau oder für allein dekorative Zwecke geeignet ist, ist aus der EP2188077B1, der FR1.045.315 und aus der US3,111,204 bekannt. Die US2006/246312, die die Basis für die Oberbegriffe der Ansprüche 1 und 11 bildet, und die US2018/0309004 zeigen strukturell ähnliche Bauelemente aus anderen Technologiefeldern.

Der allgemeine Aufbau einer Sandwich-Konstruktion ist üblicherweise dreiteilig. Auf einer unteren Deckschicht wird ein Kernelement befestigt und von oben wird eine obere Deckschicht als Abdeckelement auf diesem Kernelement fixiert. Das Kernelement sorgt dabei für die strukturell stabilisierte Beabstandung zwischen der unteren Deckschicht und der oberen Deckschicht in Form des Abdeckelements. Das Kernelement weist dazu Beabstandungselemente auf. Diese Beabstandungselemente sind Abschnitte des Kernelements, die sich aus dem Bereich der unteren Deckschicht hin in den Bereich der oberen Deckschicht erstrecken und somit die dauerhaft stabile Beabstandung der beiden Deckschichten ermöglichen.

Bei einer Variante der Sandwich-Konstruktion sind die Beabstandungselemente bevorzugt einstückig mit einer der zugehörigen Deckschichten ausgebildet, indem diese aus der zugehörigen flächigen Deckschicht zum Beispiel als Laschen herausgebogen oder als Brücken tiefgezogen werden. Somit verlaufen diese aus der zugehörigen flächigen Deckschicht heraus in Richtung zur benachbarten Deckschicht, wo sie an dieser dauerhaft fixiert sind. Durch das Herausbiegen oder das Tiefziehen von Beabstandungselementen entstehen in der einstückig mit den Beabstandungselementen ausgebildeten Deckschicht Öffnungen. Diese Deckschicht ist somit nicht mehr als durchgängig geschlossene Flächen in der Sandwich-Konstruktion vorhanden. Weiterhin ist diese Sandwich-Konstruktion nicht dreiteilig, sondern nur noch zweiteilig ausgebildet. Das Kernelement bildet dann die Beabstandungselemente und mit anderen Abschnitten des Kernelements die eine der beiden Deckschichten der Sandwich-Konstruktion aus.

Ein Nachteil eines Aufbaus mit als tiefgezogenen Brücken gebildeten Beabstandungselementen besteht darin, dass die Herstellung solcher Brücken nicht mit allen Werkstoffen möglich ist. Der Umformprozess des Tiefziehens benötigt eine hinreichende Streckfähigkeit des umgeformten Werkstoffs. Wird die Streckgrenze des Werkstoffs überschritten, bricht das Material. Das Tiefziehen eines aus diesem Werkstoff hergestellten Beabstandungselements limitiert zudem ein späteres etwaiges weiteres Verformen, da die Verformungsreserve des Materials teilweise durch das Herstellungsverfahren aufgebraucht ist und unter hoher Belastung, beispielsweise im Falle eines Crashs, die tiefgezogenen Beabstandungselemente eher versagen als dasselbe Material ohne vorherige Verformung durch einen Tiefziehvorgang.

Besonders Werkstoffe, die hohe Zugfestigkeiten aufweisen und/oder gehärtet werden können, sind zur Herstellung von Brücken mittels Tiefziehens weniger geeignet. Selbst wenn geeignete Werkstoffe verwendet werden, wird beim Tiefziehen die Materialstärke reduziert und dadurch die Stabilität der Beabstandungselemente und folglich der gesamten Sandwich-Konstruktion reduziert, was unerwünscht ist.

Wenn die Beabstandungselemente als Laschen ausgebildet sind, wird der Werkstoff zwar nicht gestreckt und somit hinsichtlich seiner Materialdicke reduziert, sondern nur gebogen. Solche Laschen sind jedoch abhängig von den spezifischen Werkstoffeigenschaften nur sehr begrenzt gegen ein einfaches Zurückbiegen der Laschen sicher. Wenn alle Laschen räumlich gleich ausgerichtet sind und Scherkräfte zwischen den beiden Deckschichten der Sandwich-Konstruktion auftreten, die entgegen der Biegerichtung der Laschen orientiert sind, werden die beiden Deckschichten unter dem Zurückbiegen der Laschen wieder einander angenähert. Eine mit derartigen Laschen als Beabstandungselemente gebildete Sandwich-Konstruktion ist deswegen nur begrenzt quer zur flächigen Ausdehnung der Deckschichten belastbar.

Des Weiteren weist eine Lasche jeweils nur ein Beabstandungselement auf, das wiederum jeweils separat an einer Deckschicht fixiert werden muss. Die Anzahl der Fixierungspunkte an der Deckschicht entspricht der Anzahl der Beabstandungselemente und ist damit doppelt so hoch wie bei Brücken, die nur einen Fixierungspunkt zum Befestigen zweier Beabstandungselemente benötigen.

Es ist daher Aufgabe der Erfindung, eine Abstandsstruktur für eine Sandwich-Konstruktion und ein Verfahren zur Herstellung einer solchen Abstandsstruktur bereitzustellen, wobei die aus dieser Abstandsstruktur gebildete Sandwich-Konstruktion gegenüber einer mechanischen Belastung der Beabstandungselemente stabiler ausgebildet und einfach herstellbar sein soll.

Die Erfindung betrifft eine Abstandsstruktur für eine Sandwich-Konstruktion, gebildet aus einer mit einer Mehrzahl von Schnitten versehenen Materialbahn aufweisend eine Materialbahnebene als eine erste Ebene, wobei durch Umformen der Materialbahn abschnittsweise eine Mehrzahl zu der ersten Ebene beabstandete und in einer zweiten Ebene angeordnete Auflageplateaus gebildet ist, wobei im Übergangsbereich von der ersten Ebene in die zweite Ebene Beabstandungselemente jeweils entlang einer Erstreckungsrichtung von der ersten Ebene in die zweite Ebene verlaufen und somit die Beabstandungselemente die erste Ebene von den Auflageplateaus beabstanden.

Erfindungsgemäß ist vorgesehen, dass durch das als Biegen der Auflageplateaus aus der ersten Ebene heraus durchgeführte Umformen der Materialbahn zum einen die Auflageplateaus in Relation zur ersten Ebene verdreht sind und zum anderen die Beabstandungselemente entlang ihrer Erstreckungsrichtung eine um deren Erstreckungsrichtung ausgebildete Verwindung aufweisen.

Derart gebildete Kernelemente, die um ihre jeweilige Erstreckungsrichtung verwundene Beabstandungselemente und Auflageplateaus aufweisen, führen in einer Sandwich-Konstruktion aus den nachfolgend erläuterten Gründen zu mehr mechanischer Stabilität als Sandwich-Konstruktionen mit Beabstandungselementen in Form unverwundener Brücken und Laschen, die aus einer planen Materialbahn gebogen und tiefgezogen werden. Das Auflageplateau ist entlang seines Außenumfangs über Beabstandungselemente mit den in der ersten Ebene verbleibenden Materialabschnitten der Materialbahn verbunden. Dadurch werden je nach Form des Auflageplateaus n Beabstandungselemente mit n=2, 3, 4,..., bevorzugt n=2 bis 8 realisiert. Dadurch wird die Fläche sehr gut ausgenutzt, es wird eine höhere räumlichstrukturelle Dichte des Kernelements durch die Summe der verwundenen Beabstandungselemente erreicht und die Abstandsstruktur ist auf diese Weise gegenüber mechanischen Belastungen widerstandsfähiger.

Eine wesentliche und vorteilhafte Eigenschaft der erfindungsgemäßen Abstandsstruktur besteht darin, dass sich bei dem als Biegen realisierten Umformen die Materialstärke, d.h. das Maß der Dicke der Materialbahn, nicht signifikant ändert. Signifikant heißt im Rahmen der vorliegenden Erfindung, dass eine Änderung der Materialstärke nicht auftritt oder kleiner 10% ist. Dies führt zum einen zu einer größeren Stabilität und mechanischen Dauerbelastbarkeit im Vergleich zu tiefgezogenen Beabstandungselementen. Zum anderen ist für den biegenden Umformprozess der Materialbahn im Vergleich zum Tiefziehen deutlich weniger Energieaufwand erforderlich.

Dadurch, dass die Beabstandungselemente und die zugehörigen Auflageplateaus in ihrer Kontur im Vergleich zu Brücken sehr kompakt sind, wobei die gesamte Fläche innerhalb der Kontur aus dem Auflageplateau und den Beabstandungselementen besteht und nicht aus Materialbahn-Abschnitten in der ersten Ebene, lässt sich das für die erste Ebene verbleibende Material in Form durchgängiger Gurte mit bevorzugt konstanter Breite ausbilden. Das gesamte in der ersten Ebene verbleibende Material der Materialbahn kann bei geschickter Anordnung damit in Form durchgängiger Gurte angeordnet sein.

Die Verwindung der Beabstandungselemente entlang ihrer Erstreckungsrichtung betrachtet beträgt bevorzugt weniger als 90°. Die Verwindung der Beabstandungselemente, die abhängig ist von einer Anzahl an Beabstandungselementen und/oder der geometrischen Form des Auflageplateaus, dessen Gestaltung sowie der beim Biegen zum Einsatz kommenden Ausprägetiefe ist, kann aber auch mehr als 90° betragen. Eine maximale Verwindung wird erreicht, wenn beim Herausbiegen des Auflageplateaus aus der Materialbahn und bei einem anschließenden zusätzlich vorgenommenen Verdrehen des Auflageplateaus die Auflageplateaus so tief aus der Materialbahn herausgeprägt und gedreht werden, dass ein Anfangsbereich des Beabstandungselementes an der ersten Ebene und ein Endbereich des Beabstandungselementes am Auflageplateau in der Aufsicht auf die Materialbahn betrachtet überlappend und somit übereinander zu liegen kommen. Eine maximale Verdrehung des Auflageplateaus zur ersten Ebene in Draufsicht auf die Materialbahn in der ersten Ebene beträgt dann zirka 360° geteilt durch die Anzahl der Beabstandungselemente pro Auflageplateau, beispielsweise maximal 90° bei einer Abstandsstruktur mit vier Beabstandungselementen bei voller Ausprägung des Auflageplateaus. Je nach Ausprägungstiefe und Anzahl der Beabstandungselemente je Auflageplateau ist der Grad der Verwindung der Beabstandungselemente auch geringer. Je nach Grad oder Höhe der Ausprägung steigt die Verwindung der Beabstandungselemente und dadurch erhöht sich deren Eulersche Knicklast. Durch die Verwindung der Beabstandungselemente reduziert sich die Knickneigung, da Teilbereiche des jeweiligen Beabstandungselements nicht mehr in der bevorzugten Knickrichtung liegen oder sich sogar quer dazu befinden können. Dadurch wird in der ursprünglich bevorzugten Knickrichtung betrachtet die effektive Knicklänge des jeweiligen Beabstandungselements verkürzt.

Die Schrägstellung und der gleich gerichtete Drehsinn der Beabstandungselemente der Abstandsstruktur erzeugen bei Zug- und/oder Druck-Belastung mit einem Kraftanteil senkrecht zum Auflageplateau ein Drehmoment am Auflageplateau, das abhängig ist vom Anstellwinkel der Beabstandungselemente und von der Größe des Auflageplateaus. Ist das Auflageplateau beispielsweise als Kernelement einer Sandwich-Konstruktion an einer oberen Deckschicht fixiert, so entsteht ein Drehmoment an einer Fügestelle, wo die obere Deckschicht am Auflageplateau fixiert ist. Dies kann genutzt werden, um beim Überschreiten eines bestimmten Belastungsmaßes ein gezieltes Versagen dieser Fügeverbindung zu erreichen. Die Festigkeit der Verbindung lässt sich ferner über Größe und Position der Fügestelle auf dem Auflageplateau einstellen.

Die Abstandsstruktur ist aus einer Materialbahn herstellbar, so dass nur ein einziges, bevorzugt einstückiges Element für ihre Herstellung benötigt wird. Dadurch kann die Abstandsstruktur sortenrein hergestellt werden. Wird zusätzlich eine obere Deckschicht bestehend aus demselben Material verwendet und kommt auch durch den Fügeprozess kein andersartiges Material zum Einsatz, wie z.B. beim Widerstandsschweißen kann die gesamte Sandwich-Konstruktion sortenrein hergestellt werden. Eine solche sortenreine Sandwich-Konstruktion kann sehr gut recycelt werden.

Ein weiterer Vorteil der Abstandsstruktur besteht darin, dass sie ohne einen Tiefziehschritt durch einen Biegeschritt umgeformt wird. Für das Tiefziehen ist im Vergleich zum Biegen der Einsatz deutlich höherer mechanischer Kräfte und somit deutlich aufwändigerer und teurerer Werkzeuge erforderlich. Dieses Problem ist bei der Abstandsstruktur vermieden, so dass sich diese im Vergleich mit einem tiefgezogenen Bauteil einfacher und kostengünstiger herstellen lässt.

Ein weiterer wichtiger Vorteil der Abstandsstruktur besteht darin, dass mittels des biegenden Ausformens, anders als beim Tiefziehen, die Auflageplateaus in Relation zur ersten Ebene verdreht werden. Wird nun jedes verdrehte Auflageplateau über Fügestellen individuell an einem flächigen Abdeckelement befestigt und somit eine Sandwich-Konstruktion ausgebildet, so kann das biegende Zurückdrehen der Auflageplateaus in Richtung der Materialbahn nicht mehr erfolgen. Dies liegt darin begründet, dass die an den verschiedenen Fügestellen der verschiedenen Auflageplateaus auftretenden Drehmomente sich gegenseitig blockieren.

Beim Fügen der Auflageplateaus mit weiteren Bauteilen wie dem Abdeckelement zum Ausbilden einer Sandwich-Konstruktion wird pro Auflageplateau mindestens eine Fügestelle erstellt. Die Fügestellen an den Auflageplateaus sind dabei beidseitig auf einfache Weise zugänglich und inspizierbar. Die Abstandsstruktur kann daher mittels verschiedener Fügetechniken mit dem Abdeckelement zur Herstellung der Sandwich-Konstruktion verbunden werden. Das Abdeckelement bildet eine zweite Deckschicht der Sandwich-Konstruktion, während die Abstandsstruktur eine erste Deckschicht und ein oder mehrere Kernelemente der Sandwich-Konstruktion bildet. Materialbahnabschnitte, die nach dem Umformen in der ersten Ebene verbleiben, bilden die erste Deckschicht aus, während die Auflageplateaus und die Beabstandungselemente die Kernelemente der Sandwich-Konstruktion ausbilden. Folglich ist der üblicherweise dreiteilige Aufbau einer Sandwich-Konstruktion aus erster und zweiter Deckschicht mit dazwischen angeordneten Kernelementen in Form eines zweiteiligen Aufbaus aus Abstandsstruktur und einer zweiten Deckschicht verwirklicht.

Anstelle der Verwendung einer Abstandsstruktur und eines Abdeckelement, ist es auch möglich, eine Sandwich-Konstruktion aus zwei Abstandsstrukturen zu bilden. Ist bei beiden Abstandsstrukturen der Abstand zwischen den jeweiligen Kernelementen einer Abstandsstruktur hinreichend groß und hinsichtlich ihrer räumlichen Anordnung aufeinander abgestimmt positioniert, so besteht die Möglichkeit, statt des Abdeckelements eine zweite Abstandsstruktur zu verwenden, wobei die Kernelemente beider Abstandstrukturen in Richtung des jeweils anderen Abstandselementes gerichtet sind und die Auflageplateaus der Kernelemente zwischen den Kernelementen der jeweils anderen Abstandsstruktur positioniert sind. Die Kernelemente der beiden Abstandstrukturen ragen dann jeweils in die Lücken zwischen den beabstandeten Kernelementen der anderen Abstandsstruktur. Die Abstandsstrukturen dieser Sandwich-Konstruktion sind mit ihren Kernelementen ineinander geschachtelt.

Die Abstandsstruktur kann alternativ oder zusätzlich mittels verschiedener Fügetechniken mit einer weiteren Abstandsstruktur verbunden werden oder sein. Anstelle einer Sandwich-Konstruktion, die aus zwei Materialbahnen, d.h. einer Abstandstruktur und einem Abdeckelement oder aus zwei ineinander geschachtelten Abstandsstrukturen besteht, können mehrere Abstandsstrukturen übereinander gestapelt werden oder sein. Ein Vorteil dabei ist, dass sich die Länge der einzelnen Beabstandungselemente für eine gesamte Sandwich-Konstruktion-Dicke reduziert (z.B. halbiert, drittelt, usw.) und die Anzahl der Beabstandungselemente je Fläche, insbesondere quadratisch, zunimmt. Hierfür sind unterschiedliche Konfigurationen von Abstandsstrukturen und Abdeckelementen möglich.

In der einfachsten Konfiguration werden abwechselnd mehrfach, d.h. mindestens zweifach, Abstandsstrukturen und Abdeckelemente übereinander gestapelt und gefügt (Abstandsstruktur, Abdeckelement, Abstandsstruktur, Abdeckelement, usw.). Der Drehsinn der einzelnen Beabstandungselemente ist dabei unerheblich.

Ebenso können mehrere der ineinander geschachtelten Sandwich-Konstruktionen oder unterschiedliche Typen von Sandwich-Konstruktionen übereinander gestapelt werden.

In einer anderen Variante werden zwei Sandwich-Konstruktionen, bestehend aus jeweils einer Abstandsstruktur und einem Abdeckelement miteinander gefügt. Dabei werden die erste Ebene der ersten Abstandsstruktur und die weitere erste Ebene der weiteren Abstandsstruktur gefügt. Die Plateaus der ersten und der weiteren Sandwich-Konstruktion sind somit nach außen gerichtet und mit dem ersten oder mit dem weiteren Abdeckelement versehen.

Der Drehsinn der der Beabstandungselemente der jeweiligen Abstandstrukturen ist für die Stabilität unerheblich. Diese Sandwich-Konstruktion besteht aus vier Elementen, wobei die zug- und drucksteifen Deckschichten außen liegen und der Kern des Sandwich aus zwei Abstandsstrukturen mit Beabstandungselementen besteht, die jeweils nur die halbe Höhe der gesamten Sandwich-Konstruktion überbrücken.

In einer weiteren Variante werden die Auflageplateaus einer ersten Abstandsstruktur mit den weiteren Auflageplateaus einer weiteren Abstandsstruktur gefügt, wobei die Materialbahnabschnitte, die nach dem Umformen der ersten Abstandsstruktur und nach dem Umformen der weiteren Abstandsstruktur verbleiben, die erste und die zweite Deckschicht der Sandwich-Konstruktion bilden. Dabei sind drei unterschiedliche Konfigurationen möglich.

Im Falle von zwei Abstandsstrukturen, die an ihren jeweiligen Auflageplateaus aneinander mechanisch fixiert sind, muss der Drehsinn der beiden Auflageplateaus zueinander gleichläufig sein, d.h. das erste Auflageplateau und das weitere Auflageplateau sind im Uhrzeigersinn oder entgegen dem Uhrzeigersinn verdreht. Wobei unter dem Drehsinn die Verdrehrichtung der jeweiligen Auflageplateaus gemeint ist, wenn diese entlang einer gleichen Aufsichtsrichtung auf die Sandwich-Konstruktion betrachtet werden. Bei dieser ersten Konfiguration lässt sich bei Anlegen mechanischen Drucks auf die aus den zwei gestapelten Abstandsstrukturen gebildete Sandwich-Konstruktion diese nicht zusammendrücken. Sie ist in sich selbst stabilisiert.

Bei einer zweiten Konfiguration ist der Drehsinn der aufeinander liegenden Auflageplateaus entlang der gleichen Aufsichtsrichtung betrachtet hingegen gegenläufig. Daher kann die Sandwich-Konstruktion zusammengedrückt werden und die Auflageplateaus verdrehen sich dabei in ihre ursprüngliche d.h. nicht ausgeprägte Position zurück, so dass diese Konfiguration instabil ist.

Um das Verdrehen bei gegensinnig verdrehten Auflageplateaus zu unterbinden, können in einer dritten Konfiguration die übereinander liegende Auflageplateaus mechanisch über ein zwischen ihnen angeordnetes Abdeckelement in Form eines Bleches an benachbarte Auflageplateaus gekoppelt werden und dadurch das Verdrehen in die ursprüngliche Position verhindert werden, so dass die Konfiguration aus zwei übereinander gestapelten Abstandsstrukturen mit mittigem Abdeckelement mechanisch stabil ist.

Unter dem Merkmal "Schnitt" ist im Rahmen der vorliegenden Erfindung eine senkrecht zur Ausbreitungsfläche der Materialbahn gerichtete, durch die gesamte Stärke der Materialbahn hindurch reichende lokale Auftrennung der Materialbahn zu verstehen. Solche Schnitte lassen sich insbesondere realisieren mittels Scherschneiden, d.h. ohne makroskopischen Materialverlust der Materialbahn, alternativ durch Verfahren wie Laser- oder Wasserstrahl- oder Plasmaschneiden mit einem vergleichsweise geringen makroskopischen Materialverlust oder weiterhin alternativ als lang gestreckte, schmale ausgestanzte Strukturen mit einem im Vergleich zum Laser- oder Wasserstrahl- oder Plasmaschneiden höheren makroskopischen Materialverlust. Ein Schnitt im Sinne der Erfindung umfasst daher auch eine lang gestreckte schmale Ausstanzung aus der Materialbahn.

Der Ausdruck "Biegen" bedeutet im Sinne der vorliegenden Erfindung, dass während des Umformens keine signifikante Veränderung der Materialstärke, also des Materialquerschnitts der Materialbahn stattfindet. Unter einer signifikanten Änderung wird eine Änderung >10% verstanden.

Die Verwindungen der Beabstandungselemente können nahe am Auflageplateau, gleichmäßig entlang deren Erstreckungsrichtung oder graduell abgestuft ausgeformt sein. Zwischen den Beabstandungselementen befinden sich Materialbahn-Öffnungen. Eine weitere Materialbahn-Öffnung entsteht in der ersten Ebene durch das Herausbiegen des Auflageplateaus und der Beabstandungselemente aus der ersten Ebene, so dass Materialabschnitte der Materialbahn, die nach dem Biegen in der ersten Ebene verbleiben, das Auflageplateau und die Beanstandungselemente, in einer Draufsicht auf die erste Ebene betrachtet, umgeben.

Die Materialbahn weist bevorzugt eine glatte Oberfläche auf. Alternativ kann die Materialbahn eine strukturierte Oberfläche aufweisen. Die Materialbahn wird bevorzugt als Tafel oder von einer Rolle oder einem so genannten Coil abgerollt verarbeitet. Die Materialbahn kann daher vor der Herstellung der Abstandsstruktur auch schon gekrümmt oder gebogen vorliegen, auch wenn sie bevorzugt beim Einbringen der Schnitte tafelförmig plan vorliegt. Bevorzugt ist die Materialbahn einstückig ausgebildet. Unter dem Ausdruck "einstückig" ist zu verstehen, dass die Materialbahn entlang ihrer Längen- und Breitenabmessungen integral und aus einem gleichen Werkstoff ausgebildet ist, während sie entlang ihrer Dickenabmessung unterschiedliche Werkstoffe aufweisen kann. Sie kann somit einschichtig oder als Schichtverbund, also als Laminat, ausgebildet sein.

Durch Einschneiden werden Schnitte in der Materialbahn hergestellt, wobei aus der ursprünglichen Materialebene der Materialbahn heraus, d.h. der ersten Ebene die Auflageplateaus mittels des als Biegen realisierten Umformens gebildet werden, wobei die Auflageplateaus nach mindestens einem Biegeschritt in einer zweiten Ebene liegen. Die zweite Ebene kann parallel oder angestellt zur ersten Ebene verlaufen. In jedem Fall ist die zweite Ebene von der ersten Ebene beabstandet, wobei der Abstand zur ersten Ebene, über die Fläche der zweiten Ebene hinweg betrachtet, variieren kann. Um die Stabilität der Sandwich-Konstruktion, für die die Abstandsstruktur vorgesehen ist, lokal an auftretende Kräfte anpassen zu können und gleichzeitig möglichst gewichtsparend zu sein, kann die Materialbahn, aus dem die Abstandsstruktur hergestellt wird, aus nachstehend in Bezug auf die Sandwich-Konstruktion erläuterten, so genannten "Tailored Blanks" bestehen. Diese werden auch als maßgeschneiderte Platine bezeichnet und sind im Wesentlichen als aus mehreren Tafeln zusammengesetzte Bleche oder Bleche, deren Dicke variiert. Mittels der Tailored Blanks kann die Stabilität der ersten oder zweite Ebene lokal eingestellt werden. Dadurch wird ein erhöhter Freiheitsgrad zur Gestaltung einer Sandwich-Konstruktion hinsichtlich seiner räumlichen Ausgestaltung erreicht.

Die Abstandsstruktur weist ein oder mehrere Kernelemente auf. Als ein Kernelement wird dabei die Kombination eines Auflageplateaus mit seinen Beabstandungselementen und den umgebenden Materialbahnabschnitten in der ersten Ebene verstanden. Die Kernelemente können gleiche oder verschiedene Abmessungen und räumliche Ausgestaltungen aufweisen. Die Kernelemente können über die Ausdehnung der Materialbahn beliebig verteilt sein, d.h. periodisch oder nicht periodisch. Ferner können die Kernelemente räumlich gleich oder verschieden orientiert sein. Auch Abstände zwischen den Kernelementen können gleich oder verschieden sein. Ferner können die Auflageplateaus der Kernelemente bei Draufsicht auf die erste oder zweite Ebene eine gleiche oder verschiedene Form aufweisen. Die Abstandsstruktur und daraus gebildete Sandwich-Konstruktionen lassen sich in ihrem Design dadurch sehr variabel ausgestalten.

Das Auflageplateau kann eben ausgebildet sein. Bevorzugt ist die zweite Ebene parallel zur ersten Ebene angeordnet. Die Plateauebene des Auflageplateaus kann aber auch gewölbt ausgebildet sein, dann verläuft die zweite Ebene zumindest abschnittsweise in einem Anstellwinkel zur ersten Ebene. Jedes Auflageplateau kann mit zwei bis n Beabstandungselementen integral ausgebildet sein. Bevorzugt sind jedem Auflageplateau drei bis fünf Beabstandungselemente zugeordnet. Jedes Auflageplateau bildet zusammen mit seinen ihm zugeordneten Beabstandungselementen jeweils ein Kernelement. Die Abstandsstruktur ist daher aus einem oder mehreren Kernelementen ausgebildet, die aus der ersten Ebene hervorstehen und die jeweils von Materialbahnabschnitten umgeben sind, die in der ersten Ebene liegen. Je weniger Beabstandungselemente einem Auflageplateau zugeordnet sind, desto größer lässt sich der Abstand zwischen dem Auflageplateau und der ersten Ebene bei gleich großer Bezugsfläche realisieren.

Die Abstandsstruktur weist nicht nur ein einziges Kernelement sondern bevorzugt eine Vielzahl von Kernelementen mit jeweils einem Auflageplateau auf, die in ihrer gedanklichen Verbindung die zweite Ebene in Form einer Plateauebene ausbilden. Diese zweite Ebene, die eine Summe der durch die Auflageplateaus ausgeformten Strukturen und deren imaginärer Verbindungsflächen darstellt, ist von der ersten Ebene beabstandet. Die zweite Ebene ist strukturell nicht durchgängig, sondern zwischen den einzelnen Auflageplateaus unterbrochen. Bevorzugt ist das oder sind die Auflageplateaus derart ausgebildet, dass sie jeweils mit einem die Auflageplateaus überspannenden weiteren Bauteil wie einem Abdeckelement zur Herstellung einer Sandwich-Konstruktion über jeweils mindestens eine Fügestelle verbindbar ist. Das Abdeckelement bildet eine dritte Ebene aus oder liegt in einer dritten Ebene. Die durch die Auflageplateaus gebildete zweite Ebene und/oder die durch das Abdeckelement gebildete dritte Ebene kann eben oder gewölbt sein. Wenn die Abstandsstruktur mehrere Auflageplateaus aufweist, weist die Materialbahn eine Vielzahl an Schnitten auf, die jeweils einem Auflageplateau zugeordnet sind.

Das Material der Materialbahn, das in der ersten Ebene verbleibt, besteht aus einzelnen Materialbahnabschnitten, die die Beabstandungselemente bevorzugt umgeben. Auch die erste Ebene kann eben oder gewölbt ausgebildet sein. Die erste Ebene, aus der die Beabstandungselemente der Summe der ausgeformten Kernelemente entspringt und aus der in der ersten Ebene verbleibenden Materialbahnabschnitte gebildet werden, ist von der zweiten Ebene beabstandet. Auch die erste Ebene ist somit strukturell nicht durchgängig, sondern zwischen den einzelnen Materialbahnabschnitten lückenhaft, ausgebildet.

In einer bevorzugten Ausführungsform weist das aus der Materialbahn herausgebogene Auflageplateau in der Aufsicht auf die erste Ebene einen Verdrehungswinkel von >5 Grad, bevorzugt >10 Grad, bevorzugter >20 Grad, noch bevorzugter >30 Grad zur ersten Ebene auf. Wenn das Auflageplateau parallel zur ersten Ebene angeordnet ist, dann ist der Verdrehungswinkel bei einer Draufsicht augenfällig. Für den Fall, dass das Auflageplateau schräg, d.h. mit einem oder mehreren Anstellwinkeln zur ersten Ebene ausgeprägt ist, wäre eine Projektion des Auflageplateaus auf die erste Ebene zur Bestimmung des Verdrehungswinkels heranzuziehen. Besonders bevorzugt ist eine Verdrehung mit einem Verdrehungswinkel im Bereich zwischen 20 bis 60 Grad.

Weiterhin bevorzugt weist das Auflageplateau einen Plateau-Umfang auf und sind die Beabstandungselemente entlang des Plateau-Umfangs mit einer Abweichung von weniger als 20 Grad, bevorzugt 10 Grad, bevorzugter 5 Grad, gleichverteilt angeordnet. Das Auflageplateau weist einen Plateau-Mittelpunkt auf, der geometrisch z.B. bei einem Plateau in Form eines Quadrates, Rechtecks, Ovals oder Kreises eindeutig definiert ist. Bei anderen Auflageplateau-Geometrien bildet der Flächenschwerpunkt den Plateau-Mittelpunkt. Vom Plateau-Mittelpunkt aus betrachtet, entlang eines Umfangs von 360 Grad betrachtet sind die Beabstandungselemente mit weniger als 20 Grad, bevorzugt weniger als 10 Grad und noch bevorzugter mit weniger als 5 Grad Abweichung gleichverteilt entlang des Umfangs angeordnet. Eine solche Anordnung der Beabstandungselemente hat bei der Herstellung der Abstandsstruktur den großen Vorteil, dass bei der als Biegen realisierten Umformung der Kernelemente aus der Materialbahn heraus die Beabstandungselemente selbsttätig die entlang ihrer Erstreckungsrichtung eintretende Verwindung vollführen und sich dabei die Verdrehung zwischen Auflageplateau und der ersten Ebene einstellt. D.h. durch einen einzigen Biegeschritt wird eine zweidimensionale Materialbahn in eine komplex gestaltete dreidimensionale Struktur umgeformt und entstehen sämtliche Beabstandungselemente eines Kernelements.

Bevorzugt sind die Schnitte jeweils linienförmig ausgebildet. Weiterhin bevorzugt weisen diese Schnitte eine zueinander gleiche Form und Gestalt auf. In einer besonders bevorzugten Ausführungsform weist jeder Schnitt einen ersten Schenkel und einen zweiten Schenkel auf, wobei der erste Schenkel in den zweiten Schenkel übergeht und zwischen einer Erstreckungsrichtung des ersten Schenkels und einer Erstreckungsrichtung des zweiten Schenkels einen Schnittwinkel bildet, wobei die Schnitte um die Auflageplateaus herum angeordnet sind. Dadurch wird gewährleistet, dass jedem Auflageplateau eine vorbestimmte Anzahl an Beabstandungselementen zugeordnet ist. Bevorzugt liegt der Schnittwinkel im Bereich von 40 bis 140 Grad, bevorzugt von 60 bis 120 Grad. Für den gesamten Wertebereich des Schnittwinkels gilt, dass der Übergang vom ersten Schenkel zum zweiten Schenkel bevorzugt in einer stetigen Krümmung beispielsweise mit einem definierten Übergangsradius erfolgt.

Die Schnitte können weiterhin einen dritten Schenkel aufweisen, wobei der erste oder zweite Schenkel in den dritten Schenkel übergeht und zwischen einer Erstreckungsrichtung des ersten oder zweiten Schenkels und einer Erstreckungsrichtung des dritten Schenkels ein weiterer Schnittwinkel eingeschlossen ist, wobei die Schnitte um die Auflageplateaus herum angeordnet sind.

In einer weiterhin bevorzugten Ausführungsform ist der erste Schenkel als langer erster Schenkel ausgebildet, im Vergleich zu dem zweiten Schenkel, der als kurzer zweiter Schenkel ausgebildet ist. Dadurch lassen sich besonders leicht die Auflageplateaus samt jeweils zugeordneten Beabstandungselementen realisieren.

Bevorzugt weisen die Schnitte vom langen ersten Schenkel zum kurzen zweiten Schenkel hin betrachtet in der Materialbahn eine gleiche Drehrichtung auf, die im Uhrzeigersinn oder gegen den Uhrzeigersinn orientiert ist. Dadurch kann ein Kernelement mit einer gleichmäßigen Struktur mittels als Biegeschritt realisiertem Umformen der Materialbahn hergestellt werden.

In einer weiterhin bevorzugten Ausführungsform ist in der Materialbahn zwischen dem einen langen ersten Schenkeln eines Schnittes und dem Auflageplateau der kurze zweite Schenkel eines benachbarten Schnittes angeordnet, wobei die Beabstandungselemente zwischen den langen ersten Schenkeln und benachbarten kurzen zweiten Schenkeln ausgebildet sind. Bei identischer Auflageplateaufläche, Anzahl und Länge der Beabstandungselemente ist eine Schnittlänge zur Herstellung eines oder mehrerer Kernelemente, die jeweils ein Auflageplateau und ihm zugeordnete Beabstandungselemente aufweisen, kürzer als Laschen oder Brücken, da einer der Schenkel sowohl zur Erzeugung der Auflageplateaufläche als auch zur Erzeugung eines Beabstandungselements verwendet wird und damit strukturell betrachtet einen doppelten Zweck erfüllt.

Eine Oberfläche der ersten und/oder zweiten Deckschicht kann eben ausgebildet sein. Die Oberfläche der ersten und/oder zweiten Deckschicht kann alternativ bevorzugt strukturiert sein beispielsweise als strukturiertes Blech ausgebildet sein. Strukturierte Bleche sind mit Ausformungen versehene flächige Bauelemente. Dadurch wird beispielsweise eine blendarme, diffuse Lichtreflexion aufgrund von Lichtpunktzerlegung bereitgestellt. Bei Verwendung eines strukturierten Blechs kann weiterhin eine Flexibilität bei thermischer Ausdehnung bereitgestellt werden. Dies gilt insbesondere bei lokaler thermischer Ausdehnung, die sonst zu einer beulenartigen Verformung der Oberfläche des Bleches führt. Die Folgen der thermischer Ausdehnungsbehinderung werden reduziert. Die Strukturhöhe der Strukturierung des strukturierten Blechs kann um ein Mehrfaches seiner Schichtdicke bis zum Zigfachen betragen. Solche Bleche sind unter anderem unter folgenden Begriffen bekannt: Wabenplatten, Strukturblech, strukturgewalztes Blech, mustergewalztes Blech. Solche strukturierten Bleche werden üblicherweise durch Prägeprozesse hergestellt. Andere, insbesondere für die erfindungsgemäße Sandwich-Konstruktion geeignete strukturierte Bleche sind sogenannte Design- Noppen oder Reliefbleche der Borit Leichtbau - Technik GmbH, Herzogenrath, Deutschland oder Wölbstrukturen der Dr. Mirtsch Wölbstrukturierung GmbH, Berlin, Deutschland. Wölbstrukturen werden nach dem Vorbild von Bienenwaben oder dem Panzer von Schildkröten und Insekten, die auch sechseckige Formen aufweisen, hergestellt. Bei deren Herstellung handelt es sich um ein Verfahren der Umformtechnik, mit dem sechseckige, dreidimensionale Strukturen in dünnwandige Materialien wie Stahl- und Aluminium-Bleche, Kunststofffolie, Pappe und Papier eingebracht werden. Um diese Strukturen herzustellen, wird sanfter Druck auf das gekrümmte, dünne Material aufgebracht und es gleichzeitig abgestützt. Das Material weicht dabei quasi selbstorganisierend und energieminimiert in eine 3D-Struktur aus. Die Oberflächengüte wird dabei jedoch vollständig erhalten, da kein flächiger Werkzeugeingriff stattfindet. Durch diese Prozedur können die entstehenden Bleche verfestigt werden, so dass geringere Blechstärken bei gleicher Stabilität zum Einsatz kommen können. Die mehrdimensionalen Versteifungen verleihen dem Werkstoff bei geringer Wanddicke eine allseitig hohe Biege- und Beulsteifigkeit. Dies ermöglicht, Bauteile insbesondere das Abdeckelement der Sandwich-Konstruktion mit gleicher Funktionalität deutlich leichter herzustellen, gleichzeitig können lokale Spannungsmaxima durch einen Ziehharmonikaeffekt kompensiert werden. Eine Gewichtsreduzierung ist aber nicht der einzige Vorteil der (wölb-)strukturierten Bleche: Wölbstrukturierte Halbzeuge lassen sich gut weiterverformen, da sie eine hohe Plastifizierungsreserve für sekundäre Umformprozesse aufweisen. Ein Vorteil des strukturierten Abdeckeckelements der Sandwich-Konstruktion ist eine Flexibilität bei thermischer Ausdehnung. Bei einer akustischen Anregung werden die tiefen Eigenfrequenzen durch die versteifende Struktur in den höheren Frequenzbereich verschoben. Unangenehmes Dröhnen dünnwandiger Bauteile lässt sich so vermindern. Außerdem verfügt das (wölb-)strukturierte Material über dämpfende Eigenschaften, wodurch sich die Abstrahlung des Körperschalls, wie beispielsweise Scheppern, reduziert. Erste und/oder zweite Deckschichten mit einer Strukturierung, die ausgebildet sind als sogenannte Dimples, können zur Reduzierung des Strömungswiderstandes führen. Solche Strukturen mit einer Dimple-Textur sind z.B. von Golfbällen bekannt und verlängern deren Flugbahn. Diese Eigenschaften machen eine aus der Abstandsstruktur gebildete Sandwich-Konstruktion beispielsweise für den automobilen Leichtbau vorteilhaft etwa als Karosserieboden.

Die erste und/oder zweite Deckschicht kann vorzugsweise aus einer einstückigen Materialbahn ausgebildet sein. Diese Materialbahn kann aber auch aus sogenannten Tailored Blanks, die auch als maßgeschneiderte Platine bezeichnet werden und im Wesentlichen als aus mehreren Tafeln zusammengesetzte Bleche oder Bleche unterschiedlicher Güten oder Bleche, deren Dicke variiert, ausgebildet sind, bestehen. Dadurch können die mechanischen Eigenschaften der ersten und/oder zweiten Deckschicht lokal an die auftretenden Kräfte angepasst werden.

Durch den Einsatz von Tailored Blanks, der Variation der Sandwich-Konstruktion-Dicke, der Dimensionierung der Beabstandungselemente und der Abstände der Auflageplateaus in der zweiten Ebene untereinander wird die Abstandsstruktur und die Sandwich-Konstruktion in ihrem Aufbau an die lokalen Kraft- und Schwingungseinflüsse bei der Dimensionierung und Herstellung der Sandwich-Konstruktion anpassbar. Dadurch, dass die Tafel(n) typischerweise aus verschiedenen Werkstoffgüten und/oder Blechdicken zusammengesetzt/- geschweißt ist, wird ermöglicht, verschiedene Stellen der als Bauteil verwendeten Abstandsstruktur oder Sandwich-Konstruktion an lokale Belastungen anzupassen, was anderenfalls zusätzliche Verstärkungsteile erfordern würde. Vorteile sind ferner eine Einsparung von Gewicht und Fertigungskosten. Bevorzugte Ausgangsmaterialien für die Materialbahn und/oder das Abdeckelement sind folgende Tailored Blank-Typen: Beim Tailor Welded Blank (TWB) werden die einzelnen Blechplatinen unterschiedlicher Dicke oder Güte aneinandergeschweißt. Dies erfolgt in der Regel als Stumpfstoß mittels Laserschweißen. Vorteilhaft sind die vielseitigen Materialkombinationen und Geometrien. Beim Tailor Rolled Blank (TRB) wird ein Blechband erneut kaltgewalzt, wobei die Walzen durch Auf- und Abfahren unterschiedliche Blechdicken erzeugen. Vorteil ist der homogene Übergang zwischen zwei Dicken. Beim Patchwork werden kleine Bleche wie Flicken aneinander mittels Widerstandspunktschweißen oder Laserstrahlschweißen geschweißt oder mittels Strukturklebstoffen geklebt.

In einer weiterhin bevorzugten Ausführungsform weist die Abstandsstruktur neben den Beabstandungselementen zusätzlich eine oder mehrere Laschen auf. Die mindestens eine Lasche erstreckt sich bevorzugt ausgehend von der ersten Ebene. Die mindestens eine Lasche ist bevorzugt aus einem oder mehreren entsprechenden Schnitten und Umformen mittels Biegens hergestellt. Die mindestens eine Lasche weist bevorzugt eine Reihe von Schnittkanten, ein Plateau, d.h. Materialbahnabschnitte, die sich in der zweiten Ebene oder Plateauebene befinden, und Materialbahnabschnitte auf, die in der ersten Ebene liegen. Anders als bei dem oder den zwingend bei der erfindungsgemäßen Abstandsstruktur vorhandenen Kernelementen, die mehrere zwischen der ersten und der zweiten Ebene angeordnete Beabstandungselemente aufweisen, ist hier nur eine Verbindung zwischen den in der ersten Ebene liegenden Materiabahnabschnitten und dem Plateau vorhanden. Beim Ausformen/Herausdrücken einer solchen Lasche braucht das Material der Lasche nur an zwei Stellen gebogen zu werden und wird nicht in sich verwunden. Die plastische Verformung tritt nur an den Biegungen auf und ist entsprechend eines ausgebildeten Biegewinkels und einem ausgebildeten Biegeradius gering. Eine derartige Lasche ist durch einen Biege- und/oder Tiefziehschritt realisierbar.

Alternativ oder zusätzlich bevorzugt weist die Abstandsstruktur neben den Beabstandungselementen weiterhin eine oder mehrere Brücken auf, wobei sich die mindestens eine Brücke bevorzugt ausgehend von der ersten Ebene erstreckt. Die mindestens eine Brücke ist bevorzugt aus einem oder mehreren entsprechenden Schnitten und durch Umformen mittels Tiefziehens hergestellt. Durch den Schneid- und Tiefziehprozess weist die Brücke bevorzugt eine Reihe von Schnittkanten, ein Plateau, das sich angrenzend an die zweiten Ebene befindet, und Materialbahnabschnitte auf, die in der ersten Ebene liegen. Im Gegensatz zur vorstehend beschriebenen Lasche weist die Brücke mindestens zwei Verbindungsstege auf, die die Ebene, in der das Plateau liegt, mit der jeweils ersten Ebene der Abstandsstruktur verbinden. Die mindestens eine Brücke wird bevorzugt durch Einschneiden/Ausstanzen der Materialbahn und Ausformen/Herausdrücken der Brücke aus der Materialbahn hergestellt, wobei wenigstens die Verbindungsstege durch Strecken plastisch verformt werden. Dieser Streckprozess ist Energie-aufwändig, benötigt besonderes Material, um Rissbildung zu vermeiden und reduziert den Materialquerschnitt, was die Wärmeleitfähigkeit zwischen einem Plateau bildenden Materialbahnabschnitten und in der anderen Ebene liegenden Materialbahnabschnitten mindert. Eine plastische Verformung/Streckung tritt entlang der Verbindungsstege auf und steigt mit der Ausprägehöhe an. Die Brücke kann n Verbindungsstege zwischen den Ebenen aufweisen, bevorzugt weist sie 3, 4 oder 5, noch bevorzugter 2 Verbindungsstege auf. Diese Verbindungsstege sind jedoch nicht entlang ihrer Erstreckungsrichtung verwunden.

Form und Dimensionierung der einzelnen Beabstandungselemente, Brücken und/oder Laschen der Abstandsstruktur können über die Fläche der Abstandsstruktur oder der Sandwich-Konstruktion, in die die Abstandsstruktur integriert ist, konstant sein. Ebenso können benachbarte Beabstandungselemente, Brücken und/oder Laschen einen konstanten Abstand zueinander aufweisen und/oder in einer oder in mehreren Richtungen mehrfach identisch beabstandet sein, so dass eine gleichförmige Matrix von Beabstandungselemente, Brücken und/oder Laschen über die Fläche der Abstandsstruktur entsteht. Ebenso kann eine völlig beliebige Verteilung der Beabstandungselemente, Brücken und/oder Laschen vorliegen, bei der die einzelnen Abstände benachbarter Beabstandungselemente, Brücken und/oder Laschen variiert und/oder die Orientierung der einzelnen Beabstandungselemente, Brücken und/oder Laschen nicht parallel ist oder in Richtung einer Linie verläuft. Die Beabstandungselemente, Brücken und/oder Laschen können auch beliebig gegeneinander verdreht sein. Auch kann die Größe der Beabstandungselemente, Brücken und/oder Laschen über die flächige Ausdehnung variieren. Damit ist nicht nur deren Ausprägehöhe gemeint, sondern quasi deren Länge und/oder Breite ihrer Grundfläche in der Abstandsstruktur oder der Sandwich-Konstruktion. Es können also z.B. gleichartige Beabstandungselemente, Brücken und/oder Laschen, z.B. Brücken, in schmaler und breiter Ausführung nebeneinander platziert sein, deren Plateaus gleich breit sind und deren Beabstandungselemente eine unterschiedliche Länge aufweisen. Es können auch unterschiedliche Typen von Beabstandungselementen, Brücken und/oder Laschen über die Sandwichfläche verteilt sein. Jede beliebige Variation ist denkbar und kann eingesetzt werden, um die Anforderungen an die Abstandsstruktur optimal zu erfüllen. Die Abstandsstruktur kann sehr flexibel designt werden und weist daher auch eine große Anwendungsbreite auf.

Die Abstandsstruktur weist eine oder mehrere Aussparungen und/oder Öffnungen auf. Eine Öffnung dient beispielsweise zur Belüftung, als Durchführung oder als Platz für Einbauteile. Zudem kann die Aussparung oder Öffnung zur Platz- oder Gewichtsersparnis dienen, also die Aufbauhöhe der Abstandsstruktur an dieser Stelle auf die Materialstärke der in der ersten Ebene liegenden Materialbahnabschnitte reduzieren. Dies kann z.B. sinnvoll sein, um an dieser Stelle zusätzlich erforderlichen Platz für einen oder mehrere Einbauten, bei einer mit einer solchen Abstandsstruktur als Sandwich-Konstruktion ausgebildeten Motorhaube beispielsweise für Motorraumeinbauten zu schaffen.

Um bei Druckbeanspruchung an den einzelnen Beabstandungselementen den in der ersten Ebene liegenden Materialbahnabschnitten die Eigenschaften zur Knickneigung der Beabstandungselemente bei Druckbeanspruchung zu reduzieren, können eine oder mehrere Sicken bevorzugt an einem Beabstandungselement eingebracht sein. Beispielsweise zur Versteifung längs der Erstreckungsrichtung des Beabstandungselements oder Materialbahnabschnittes. Die Querschnitte der Beabstandungselemente und Materialbahnabschnitte sind linienförmig oder rechteckig mit einer Rechteck-Breite, die der Breite des Beabstandungselements entspricht, und einer Rechteck-Höhe, die der Materialbahndicke entspricht. Ebenso bestehen die Materialbahnabschnitte, die in der ersten Ebene liegen, aus Bereichen oder Stegen mit linienförmigem Querschnitt. Auch diese Bereiche mit linienförmigem Querschnitt in der ersten Ebene können durch Abwinkeln oder durch Einprägen einer oder mehrerer Sicken gegen Einknicken ausgesteift werden. Es wird quasi ein flaches Materialprofil in ein Winkelprofil o.ä. umgeformt. Die Profilierung kann sich über die gesamte Länge oder nur einen Teilbereich des in der ersten Ebene nach dem Umformen verbleibenden Materialbahnabschnitt und/oder des Strukturelements insbesondere des Beabstandungselements erstrecken.

Um die Kerbwirkung an den Enden der Schnitte in der Abstandsstruktur zu reduzieren, sind bevorzugt an deren Enden Bohrungen mit abgerundeter Kontur vorgesehen oder eine Umformung ausgebildet. Beispielsweise kann sich an den jeweiligen Enden der Schnitte eine Bohrung in Form eines Bohrlochs befinden, die ggf. einen Kragen aufweist oder auch komplett umgebördelt ausgebildet ist.

Die Erfindung betrifft weiterhin bevorzugt eine Sandwich-Konstruktion, aufweisend eine Abstandsstruktur gemäß einer oder mehrerer der vorstehend beschriebenen Ausführungsformen und ein Abdeckelement, das an den Auflageplateaus befestigt ist.

Vorteile einer solchen Sandwich-Konstruktion sind, dass sie aus nur zwei Elementen aufgebaut, sortenrein und einfach herstellbar ist und die Fügestelle beidseitig zugänglich und inspizierbar ist. Dadurch können verschiedene Fügetechniken zum Einsatz kommen. Zudem ist die Sandwich-Konstruktion von gasförmigen oder flüssigen Medien durchströmbar. Die Sandwich-Konstruktion ist aufgrund ihrer strukturellen Ausbildung weiterhin einfach befüllbar. Ferner weist die Sandwich-Konstruktion ein attraktives Design auf, weil sie eine glatte oder strukturierte Oberfläche aufweisen kann, wie vorstehend bereits beschrieben. Die Sandwich-Konstruktion ist aus den Ausgangsmaterialien unter vollständigem Erhalt der Oberflächengüte herstellbar.

Die erfindungsgemäße Sandwich-Konstruktion zeichnet sich insbesondere dadurch aus, dass:
- sie aus nur zwei Elementen bestehen kann;
- sie eine hohe Steifigkeit aufweist, auch bei geringen Materialstärken und/oder geringem Gewicht; die Steifigkeit ist lokal einstellbar;
- die Form der Sandwich-Konstruktion vergleichsweise einfach an äußere Randbedingungen wie z.B. Design einer Karosserieaußenhaut, Motorraumeinbauten etc. anpassbar ist;
- sie günstige akustische Eigenschaften und/oder eine verbesserte Akustik aufweist durch Eigendämpfung, gedämpften Körperschall, reduziertes Scheppern besonders bei Kombination mit strukturiertem Abdeckelement;
- sie geringe Plastifizierungsgrade des Ausgangsmaterials bei der Herstellung erfordert. Dadurch sind relativ hohe sekundäre Umformgrade darstellbar und/oder es werden relativ sehr hohe Umformreserven für sekundäre Umformung oder bei einem auf die Sandwich-Konstruktion einwirkenden Crash bereitgestellt;
- keine Beeinträchtigung der Oberflächengüte bei entsprechenden Fügeverfahren zum Fügen des Abdeckelements und der Abstandsstruktur auftreten; und
- bei Verwendung ausgewählter Stahlsorten und Fügetechniken die Sandwich-Konstruktion in weiteren Verfahrensschritten einfach härtbar ist.

Die erfinderische Sandwich-Konstruktion hat einen breiten Anwendungsbereich in vielen unterschiedlichen Einsatzgebieten. In Ihrer einfachsten Form besteht sie aus nur zwei Elementen, einem ersten Element, d.h. der Abstandsstruktur, die die Kernelemente und die erste Deckschicht ausbildet und einem zweiten Element, d.h. dem Abdeckelement, das die Deckschicht eines Tragwerks bildet oder die zweite Deckschicht der erfindungsgemäßen Sandwich-Konstruktion darstellt, wobei die Kernelemente die Beabstandungselemente und Auflageplateaus aufweisen, die die Verbindungsstelle zur zweiten Deckschicht bilden. Diese beiden Elemente sind bevorzugt form-, kraft- und/oder stoffschlüssig miteinander verbunden. Dadurch entsteht im Wesentlichen ein Raumtragwerk, bei dem die Kernelemente und ggf. Brücken und/oder Laschen zwischen den in der ersten Ebene liegenden Materialbahnabschnitten der Abstandsstruktur und der in der dritten Ebene liegenden Deckschicht die Tragwerksstäbe des Tragwerkkerns bilden. Ebenso bilden nach dem Umformen der Materialbahn zu der Abstandsstruktur die in der ursprünglichen ersten Ebene verbleibenden Materialbahnabschnitte eine Deckschicht des Tragwerks oder die erste Deckschicht der erfinderischen Sandwich-Konstruktion, wobei die in der zweiten Ebene liegenden Auflageplateaus nur als Fügestelle dienen. D.h. die Sandwich-Konstruktion weist das Abdeckelement als zweite Deckschicht, die in der ersten Ebene liegenden Materialbahnabschnitte als eine erste Deckschicht und dazwischen liegende Kernelemente auf, die sandwichartig von den beiden Deckschichten umgeben sind.

In einer alternativ bevorzugten Ausführungsform weist die Sandwich-Konstruktion mindestens zwei Elemente in Form von Abstandsstrukturen auf. Bevorzugt weist sie ein erstes Element als Abstandsstruktur auf, die die Kernelemente und die erste Deckschicht ausbildet und ein zweites Element in Form einer weiteren Abstandsstruktur, die eine zweite Deckschicht und weitere Kernelemente ausbildet. Die Kernelemente sind bezüglich ihrer Ausformungsrichtung aufeinander zu ausgerichtet. Für diese bevorzugte Ausführungsform gibt es wiederum zwei bevorzugte Varianten.

In einer ersten bevorzugten Variante sind die Abstandsstruktur und die weitere Abstandsstruktur über deren jeweilige Auflageplateaus aneinander fixiert, wobei ggf. eine weitere Deckschicht zwischen den Auflageplateaus angeordnet sein kann, so dass die Sandwich-Konstruktion dann drei Elemente aufweist. Die oder drei Elemente sind bevorzugt form-, kraft- und/oder stoffschlüssig miteinander verbunden.

Für den Fall, dass in dieser ersten bevorzugten Variante das dritte Element, also die weitere Deckschicht nicht vorhanden ist, kann hierbei der jeweilige Drehsinn der Auflageplateaus in einer Aufsicht auf die Sandwich-Konstruktion betrachtet wichtig für die Stabilität der Sandwich-Konstruktion sein. Wenn der Drehsinn aller aufeinander zu liegen kommenden Auflageplateaus entlang der gleichen Aufsichtsrichtung auf die Sandwich-Konstruktion betrachtet gleichsinnig, also im Uhrzeigersinn oder entgegen dem Uhrzeigersinn ist, kann die Sandwich-Konstruktion nicht zusammengedrückt werden, wenn eine Kraft entlang der Aufsichtsrichtung angelegt wird. Sie ist stabil.

Ist der Drehsinn der aufeinander zu liegen kommenden Auflageplateaus gegenläufig zueinander, kann die Sandwich-Konstruktion zusammengedrückt werden und die Auflageplateaus verdrehen sich dabei in ihre ursprüngliche d.h. nicht ausgeprägte Position zurück. Diese Verdrehung kann jedoch unterbunden werden durch eine weitere mittig zwischen den Auflageplateaus durchgängig verlaufende Deckschicht, die mechanisch an die Auflageplateaus gekoppelt ist. Beispielsweise können die Auflageplateaus verklebt oder verschweißt oder anderweitig mit der Zwischen-Deckschicht verbunden sein.

In einer zweiten bevorzugten Variante sind die Kernelemente der beiden Abstandsstrukturen hinsichtlich ihrer räumlichen Dichte und Anordnung so ausgebildet, dass diese verschachtelt sind, d.h. derart ineinander greifen, dass die Auflageplateaus des Abstandselements auf der weiteren ersten Ebene des weiteren Abstandselements zu liegen kommen und umgekehrt die weiteren Auflageplateaus des weiteren Abstandselements auf der ersten Ebene des Abstandselements zu liegen kommen.

Weiterhin bevorzugt kann die Sandwich-Konstruktion auch vier Elemente aufweisen. Beispielsweise weist sie die Abstandstruktur und die weitere Abstandsstruktur auf, die die Kernelemente bilden und die Kombination der beiden Abstandsstrukturen an ihren Außenseiten von zwei Abdeckelementen sandwichartig umschlossen ist. Die Abdeckelemente bilden die erste und die zweite Deckschicht. Es können auch mehr als zwei Abstandstrukturen übereinander gestapelt werden, um eine noch größere Sandwich-Konstruktion zu bilden. Vorteil des Übereinanderstapelns mindestens zweier Abstandsstrukturen ist, dass sich die Länge der einzelnen Beabstandungselemente betrachtet über die gesamte Sandwich-Konstruktion-Dicke reduziert (z.B. halbiert, drittelt, usw.) und die Anzahl der Beabstandungselemente je Fläche, insbesondere quadratisch, zunimmt. Aus diesem Grund wird die die Sandwich-Konstruktion mechanisch noch stabiler. Die übereinander gestapelten Abstandstrukturen können jeweils eine Vielzahl von Kernelementen mit jeweils einem Auflageplateau aufweisen.

Die Sandwich-Konstruktion ist bevorzugt selbsttragend ausgebildet. D.h., die Sandwich-Konstruktion benötigt kein Rahmenelement. Daher ist sie beispielsweise als Motorhaube eines Kraftfahrzeuges geeignet.

Die Sandwich-Konstruktion kann ein oder mehrere beispielsweise zwei Abdeckelemente aufweisen. Bevorzugt weist sie ein Abdeckelement auf. Das oder die Abdeckelemente können gewölbt sein. Die Sandwich-Konstruktion ist an die lokalen Kraft- und Schwingungseinflüsse einfach anpassbar ausgebildet. Wenn das oder die Abdeckelemente gewölbt sind, sind das oder die Auflageplateaus der Abstandsstruktur bevorzugt an Fügestellen, an denen die Abstandsstruktur und das Abdeckelement miteinander verbunden sind, möglichst parallel zum Abdeckelement ausgebildet, um Kontaktflächen der Auflageplateaus möglichst vollständig als Fügefläche bereitzustellen. Dadurch können Spalten an den Fügestellen vermieden werden. Bevorzugt ist das oder sind die Auflageplateaus jeweils entsprechend zum Abdeckelement geneigt, wenn die erste Ebene der Abstandsstruktur und/oder das Abdeckelement nicht parallel zueinander angeordnet sind. Wenn die erste Deckschicht und/oder die zweite Deckschicht gekrümmt oder gewölbt sind, können sie weiterhin an einer oder mehreren Fügestellen beispielsweise an ihren Rändern gefügt oder miteinander verbunden sein. Auch die erste Deckschicht kann optional mit einem weiteren Abdeckelement verbunden sein oder werden.

Eine lokale Höhe der Sandwich-Konstruktion ist unabhängig von einer Größe eines benachbarten Kernelements; ein entsprechend angeordnetes größeres Kernelement ermöglicht dort einen größeren Abstand zwischen der ersten Deckschicht und der zweiten Deckschicht als ein im Vergleich kleineres Kernelement in der Sandwich-Konstruktion. Die Kernelemente können beliebig innerhalb der Sandwich-Konstruktion verteilt sein, d.h. periodisch oder nicht periodisch. Ferner können die Kernelemente räumlich gleich oder verschieden orientiert sein. Die Sandwich-Konstruktion kann mehrere gleich große oder verschieden große Kernelemente aufweisen. Auch Abstände zwischen den Kernelementen können in der Sandwich-Konstruktion gleich oder verschieden ausgebildet sein.

Die beiden Deckschichten sind bevorzugt jeweils aus einem tafelförmigen Material hergestellt, beispielsweise in Form eines Metallblechs. Als Fügetechnik zum Fügen des Abdeckelements mit dem oder den Auflageplateaus werden beispielsweise Techniken wie z.B. Kleben, Schweißen, Clinchen, Nieten, Schrauben etc. oder Kombinationen dieser Techniken eingesetzt.

Die Sandwich-Konstruktion wirkt bevorzugt als flaches Raumtragwerk in einer Leichtbaukonstruktion, bei der die Abmessung der Dicke oder Höhe im Vergleich zur Längsausdehnung sehr gering ist. Grundsätzlich können Raumtragwerke als Scheibe oder Platte fungieren. Greifen die Kräfte senkrecht zur Tragwerksebene an, spricht man von Platten. Bei einer Scheibe wirken die Kräfte in der Tragwerksebene. Ist ein Raumtragwerk gekrümmt, spricht man von einer Schale. Sind Scheiben oder Platten in ihrer Struktur homogen, lässt sich das Verhalten als isotrop, also richtungsunabhängig, beschreiben. Die Steifigkeiten sind in allen Richtungen gleich. Liegt hingegen eine Anisotropie vor, ist die Struktur inhomogen und es zeigt sich eine Richtungsabhängigkeit einer Eigenschaft.

Die Sandwich-Konstruktion weist ferner ein attraktives Design auf. Sie kann eine ebene oder gewölbte Oberfläche aufweisen und ist daher entsprechend einem geforderten Design anpassbar. In einer bevorzugten Ausführungsform ist das Abdeckelement als ebene Fläche ausgebildet. Alternativ oder zusätzlich bevorzugt ist das Abdeckelement als ein- oder mehrfach gekrümmte Fläche oder ein- oder mehrfach gewölbte Fläche ausgebildet. Die Abstandsstruktur weist bevorzugt eine Vielzahl identischer oder unterschiedlich ausgebildeter Abstandsplateaus auf. Wölbungen oder Krümmungen können gleich oder unterschiedlich ausgebildet sein. Eine Krümmung oder Wölbung kann zweidimensional oder dreidimensional ausgebildet sein. Ein Abstand zwischen der ersten Deckschicht und der zweiten Deckschicht kann beliebig variieren. Anstelle einer Krümmung oder Wölbung können beide Deckschichten auch wellenförmige oder beliebige andere Formen aufweisen.

Das Abdeckelement kann eine glatte Oberfläche aufweisen oder strukturiert sein. Je nach verwendeten Materialien ist die Sandwich-Konstruktion völlig sortenrein. Sortenrein heißt, dass alle Elemente der Sandwich-Konstruktion aus demselben Material bestehen, wobei Fügetechniken zum Fügen der Abstandsstruktur und des Abdeckelements eingesetzt werden, bei denen kein weiteres Material wie z.B. Klebstoff, Lot, Schweißdraht verwendet wird, das aus einem anderen Material besteht. Ist die gesamte Sandwich-Konstruktion sortenrein, ist sie sehr gut recycelbar. Die Sandwich-Konstruktion kann auch aus mehreren unterschiedlichen Materialien bestehen. Dabei können die Abstandsstruktur und das Abdeckelement aber auch das Fügemittel wie z.B. Klebstoff, Niet oder Lot aus unterschiedlichen Materialien bestehen. Bevorzugte Materialien für die Abstandsstruktur und das Abdeckelement sind Metallbleche, es können auch Kunststoffplatten, Faserverbundplatten, Holz oder Papier und Laminate aus einer flächigen Kombination dieser Werkstoffe eingesetzt werden.

Das erste Abdeckelement kann beispielsweise eben sein, wie das Blech, aus dem es hergestellt wird, oder aber auch vor seinem Einsatz in der Sandwich-Konstruktion beliebig gewölbt worden sein. Es kann beispielsweise eine Form aufweisen, wie z.B. die einer Haut eines Karosseriebauteils, das beispielsweise mittels eines Tiefziehprozesses hergestellt wurde. Das Abdeckelement kann konvex und/oder konkav geformte Bereiche und/oder ebene Bereiche aufweisen.

Bevorzugt weist das Abdeckelement eine oder mehrere Aussparungen und/oder Öffnungen auf. Eine Öffnung dient beispielsweise zur Belüftung, als Durchführung oder als Platz für Einbauteile. Zudem kann die Aussparung und/oder Öffnung als Platz- oder Gewichtsersparnis dienen. Ferner kann eine Öffnung z.B. sinnvoll sein, um an dieser Stelle zusätzlich erforderlichen Platz für eine oder mehrere Einbauten in einer komplexen Gesamtprodukt, beispielsweise einem Kraftfahrzeug, bereitzustellen.

Ferner können die erste Deckschicht und/oder die zweite Deckschicht eine oder mehrere Ausformungen aufweisen. Die Ausformung(en) können zur Positionierung der Sandwich-Konstruktion zu einer benachbart angeordneten Sandwich-Konstruktion oder anderem Bauteil dienen. Ferner können die Ausformung(en) als Befestigungspunkte für ein weiteres Bauteil wie eine benachbarte Sandwich-Konstruktion dienen.

Optional kann die Sandwich-Konstruktion zur Geräusch- und/oder Wärmedämmung durch teilweises oder vollständiges Ausfüllen mit Dämmmaterial oder durch Auflegen einer Dämmung auf eine der Deckschichten mit Dämmmaterial ausgestattet werden. Das Dämmmaterial kann sich bereits auf einem der Sandwich-Elemente befinden oder nachträglich in die bereits verklebte Sandwich-Konstruktion eingebracht werden z.B. durch Einspritzen wie PU- (Polyurethan-)Schaum. Es kann monolithisch d.h. kompakt, ohne Hohlräume oder aufgeschäumt ausgestaltet sein.

Optional kann das Abdeckelement selber eine starke dämmende Wirkung aufweisen. Alternativ oder zusätzlich kann auf wenigstens einer der beiden Seiten der Sandwich-Konstruktion insbesondere nach außen gerichtet ein zusätzliches Dämmmaterial angeordnet sein.

Auch kann die Sandwich-Konstruktion mit einem Füllmaterial zur mechanischen Unterstützung der Sandwich-Konstruktion ausgefüllt werden und dadurch beispielweise das Einknicken der Beanstandungselemente ggf. der Brücken und/oder Laschen unter Druckbelastung mindern/verhindern. Anstelle von Dämmmaterial kann das Füllmaterial zur mechanischen Unterstützung der Sandwich-Konstruktion dienen. Ein mit Füllmaterial ausgefüllter Sandwichkern wird die Sandwich-Konstruktion bei Einwirkung großer Kräfte wie z.B. bei einem Crash, der eine starke Verformung verursacht, mechanisch zusätzlich stabilisieren und die sich im Kern der Sandwich-Konstruktion befindenden Beabstandungselemente und ggf. Brücken und/oder Laschen gegen ein Einknicken unterstützen und weitere Verformungsenergie aufnehmen, so dass eine Knautschzone innerhalb der Sandwich-Konstruktion bereitgestellt ist. Dadurch wird die Sandwich-Konstruktion stabiler. Insbesondere bei Sandwich-Konstruktionen mit relativ hohen Dicken und relativ langen, schmalen Beabstandungselementen und ggf. Brücken und/oder Laschen, die unter Druckbelastung zum Knicken neigen, kann ein Füllmaterial dazu genutzt werden, die Beabstandungselemente und ggf. Brücken und/oder Laschen zu unterstützen und dadurch einer Knickung vorzubeugen. Außerdem kann das Füllmaterial die Sandwich-Konstruktion bei Normalkräften auf eine Sandwichebene unterstützen. Das Ausfüllen der Sandwich-Konstruktion kann, ähnlich wie bei der Polymer-Metall-Hybrid-Technologie (PMH), bei der ein geschlossenes, rohrförmiges Aluminiumprofil zunächst unter Hochdruck geformt und anschließend mit Kunststoff im selben Werkzeug umspritzt wird, auch in demselben Werkzeug erfolgen. Das Füllmaterial kann neben dem Stützeffekt auch den Schall-Dämpfungs- und/oder Wärmedämmeffekt erfüllen.

In die Sandwich-Konstruktion können Kühl- und/oder Heizelemente integriert werden. Es können weiterhin Leitungen oder Leerrohre integriert werden. Zu Kühl- und/oder Heizzwecken kann in die Sandwich-Konstruktion ein Leitungssystem eingebracht sein oder werden. Dieses kann vor dem Fügeprozess in Freiräume der Abstandsstruktur, die sich zwischen den Strukturelementen befinden, eingelegt werden, z.B. als mäanderförmige Rohrleitung aus einem Metall. Es kann aber auch eine beliebige andere Leitungsführung gewählt werden, oder Rohre aus einem anderen Material oder ein flächiges Leitungssystem aus zwei miteinander fluiddicht gefügten geprägten Platten verwendet werden. Hierbei wird wenigstens eine der Platten derart geprägt, dass nach dem fluiddichten Fügen ein Leitungssystem entsteht, das wenigstens einen Zu- und einen Ablauf aufweist und durch das ein flüssiges oder gasförmiges Medium fließen kann. Das Leitungssystem kann dabei Aussparungen aufweisen durch die ein oder mehrere Elemente der Sandwich-Konstruktion wie ein Strukturelement hindurchragen. Je nach Verwendung des Typs von Strukturelementen und deren Position zueinander können die Leitungen auch durch die einzelnen Strukturelemente eingeschoben werden. Dies kann vor oder auch nach dem Fügeprozess des Abdeckelements mit der Abstandsstruktur erfolgen. Ein Durchmesser einer verwendeten Rohrleitung kann so angepasst werden, dass die Rohre in mechanischem Kontakt mit den Elementen der Sandwich-Konstruktion stehen. So wird ein besonders guter Wärmetransport zur Sandwich-Konstruktion ermöglicht.

Ähnlich wie die Rohrleitung zu Heiz- und/oder Kühlzwecken kann ein Leitungssystem von elektrischen Leitungen, Datenleitungen oder Leerrohren in die Sandwich-Konstruktion eingebracht sein.

Um einwirkende Kräfte an den Krafteinleitungspunkten besser zu verteilen und lokale Überbeanspruchung der Sandwich-Konstruktion zu vermeiden, kann die Sandwich-Konstruktion lokal mit einer oder mehreren Verstärkungen versehen sein. Diese können vor, beim oder nach dem Fügeprozess an der Abstandsstruktur und/oder dem Abdeckelement durch ein beliebiges Fügeverfahren befestigt werden. Am sinnvollsten ist es, die Verstärkung(en) beim Fügen der Sandwich-Konstruktion mit zu assemblieren.

Des Weiteren kann vorgesehen sein, dass mindestens ein äußerer Rand, insbesondere zwei gegenüberliegende Ränder, vorzugsweise alle Ränder, der Sandwich-Konstruktion z.B. durch Abkanten umgeformt ist/sind. Dadurch kann ein zur Versteifung geeignetes Profil ausbildet werden, wie z.B. eine Kastenprofil. Ein solches Abkanten dient der weiteren Versteifung der Deckschichten. Auch kann vorgesehen sein, dass die Sandwich-Konstruktion Halterungen wie Halteösen, Klammern, Kabelführungen für eine elektrische Verkabelung umfasst. Diese Ausgestaltung ermöglicht, auf weiteres Montagematerial wie z.B. Kabelbinder, etc. verzichten zu können.

Die Sandwich-Konstruktion kann freitragend sein wie z.B. eine Motorhaube oder mit Rahmenelementen mechanisch verbunden sein wie z.B. eine Dachhaut, die beispielsweise mit einem Space Frame verklebt ist. In dem Fall, bei dem die erste Deckschicht und zweite Deckschicht nicht an ihren Rändern in einer Ebene zusammenlaufen, sondern beabstandet bleiben, besteht ferner die Möglichkeit beide durch die beiden Deckschichten gebildeten Ebenen auch beabstandet mit einem tragend ausbildbaren Karosserieteil wie z.B. einem Space-Frame-Profil zu verbinden. Durch die äußere Anbindung an tragende Teile wird die Stabilität weiter gesteigert.

Sowohl bei der Abstandsstruktur als auch bei der Sandwich-Konstruktion handelt es sich bevorzugt um Leichtbauelemente. Solche Sandwichstrukturen sind bei geringem Gewicht sehr biege- und beulsteif. Dabei kann der Kern aus Vollmaterial (Polyethylen, Balsaholz), Schaumstoff (Hartschaum, Metallschaum) oder Wellstrukturen (wie bei Wellpappe) oder Wabengitter (Papier, Pappe, Metall, Kunststoff) bestehen. Der Kern überträgt auftretende Schubkräfte und stützt die beiden Deckschichten der Sandwich-Konstruktion. Bevorzugt wird eine wärmedämmende und akustische Isolationseigenschaft der leichten Kernwerkstoffe genutzt. Als erste und/oder zweite Deckschicht sind Metallblech, (Sperr-)holz, Kunststoffplatten oder Faserverbundwerkstoffe bevorzugt. Krafteinleitungspunkte können beispielsweise mit VerstärkungsEinlagen versehen werden.

Als Fügetechniken zum Fügen des Auflageplateaus und des Abdeckelements kommen z.B. Kleben, Schweißen, Clinchen, Nieten, Schrauben etc. oder Kombinationen daraus in Frage. Anders als beim Kleben und bei einigen Verfahren des Schweißens und Schraubens ist es z.B. beim Widerstands-Punkt- oder Rührreibschweißen, Clinchen oder bei einigen Nietverfahren erforderlich, die Fügestelle von zwei Seiten zu erreichen. Dies ist bei der erfindungsgemäßen Sandwich-Konstruktion möglich, so dass eine Vielzahl an Fügetechniken zur Herstellung der Sandwich-Konstruktion einsatzbar ist. Dies ist bei den sonst üblichen Sandwich-Konstruktionen mit zwei geschlossenen Deckschichten nicht möglich, weil sie einen Zugang ins Innere der Sandwich-Konstruktion versperren und dadurch ein Teil eines Füge-Werkzeugs nicht an die Fügestelle gelangen kann, so dass die Auswahl Fügetechniken reduziert ist. Viele der Vorteile einer solch großen Auswahl an Fügetechniken wie Sortenreinheit der Sandwichelemente oder besondere mechanische Eigenschaften können bei geschlossenen Sandwich-Konstruktionen im Gegensatz zur erfindungsgemäßen Sandwich-Konstruktion nicht genutzt werden.

Um die Stabilität der Sandwich-Konstruktion lokal an die auftretenden Kräfte anpassen zu können und gleichzeitig möglichst gewichtsparend zu sein, können das Abdeckelement und/oder die Materialbahn, aus dem die Abstandsstruktur hergestellt wird, aus Tailored Blanks bestehen, in ihrer Dicke variieren oder die Dimensionierung der einzelnen Kernelemente der Abstandsstruktur und deren Abstände untereinander variieren.

Die erste und/oder die zweite Deckschichten der Sandwich-Konstruktion bilden bevorzugt eine Platte, Scheibe oder Schale. Je nach Randbedingungen wie räumliche Gegebenheiten oder Designvorgaben müssen die erste Deckschicht und die zweite Deckschicht bestimmten räumlichen Vorgaben genügen und eine gewisse Form aufweisen oder dürfen nicht in einen bestimmten räumlichen Bereich hineinragen. Dadurch kann sich über die flächige Ausdehnung der Sandwich-Konstruktion eine variierende Dicke ergeben. Bei Sandwich-Konstruktionen, die keinen oder wenigen räumlichen Randbedingungen unterliegen oder bei denen aufgrund der auftretenden Kräfteverteilung lokal große Sandwich-Konstruktion-Dicken wünschenswert sind, können diese gezielt ausgenutzt werden, um an diesen Stellen hohe Biegesteifigkeiten zu erzielen.

Innerhalb der Fläche der Sandwich-Konstruktion, aber auch an deren Rand können die erste Deckschicht und die zweite Deckschicht zusammengeführt sein, um dort die Sandwich-Konstruktion-Dicke zu minimieren. Auch können eine oder beide der ersten und zweiten Deckschichten in der Fläche eine Aussparung aufweisen, sodass eine der Deckschichten dort nicht vorhanden ist oder dort, wo beide Deckschichten fehlen eine Öffnung entsteht. In den Randbereichen der Sandwich-Konstruktion und auch in den Randbereichen der Öffnung(en) können die beiden Deckschichten mittels der genannten oder anderer Fügetechniken miteinander verbunden sein. Auch ein Umfalzen der einen Deckschicht um die andere Deckschicht ist geeignet, um beide Deckschichten miteinander zu verbinden.

Form und Dimensionierung der einzelnen Strukturelemente der Abstandsstruktur können über die Fläche der Sandwich-Konstruktion konstant sein. Ebenso können benachbarte Strukturelemente einen konstanten Abstand zueinander aufweisen und/oder in einer oder in mehreren Richtungen mehrfach identisch beabstandet sein, so dass eine gleichförmige Matrix von Strukturelementen über die Fläche der Sandwich-Konstruktion entsteht. Ebenso kann eine völlig beliebige Verteilung der Strukturelemente vorliegen, bei der die einzelnen Abstände benachbarter Strukturelemente variiert und/oder die Orientierung der einzelnen Strukturelemente nicht parallel ist oder in Richtung einer Linie verläuft. Die Strukturelemente können auch beliebig gegeneinander verdreht sein. Auch kann die Größe der Strukturelemente über die flächige Ausdehnung variieren. Damit ist nicht nur deren Ausprägehöhe gemeint, sondern quasi deren Länge und/oder Breite ihrer Grundfläche in der Sandwich-Konstruktion. Es können also z.B. bei einer Sandwich-Konstruktion mit planparallelen Deckschichten gleichartige Strukturelemente, z.B. Brücken, in schmaler und breiter Ausführung nebeneinander platziert sein, deren Plateaus gleich breit sind und deren Verbindungsstege eine unterschiedliche Länge aufweisen und entsprechend einen verschiedenen Anstellwinkel in Bezug zur ersten Deckschicht aufweisen. Es können auch unterschiedliche Typen von Strukturelementen über die Sandwich-Konstruktion-Fläche verteilt sein. Jede beliebige Variation ist denkbar und kann eingesetzt werden, um die Anforderungen an die Sandwich-Konstruktion, die ihre Verwendung an sie stellt, optimal zu erfüllen.

Die Abstandsstruktur und die Sandwich-Konstruktion werden bevorzugt im Kraftfahrzeug-Bereich verwendet. Die Abstandsstruktur und/oder die Sandwich-Konstruktion können aber auch in anderen Technologiefeldern verwendet werden wie z.B. der Luft- und Raumfahrt, Dachkonstruktionen oder große Tragkonstruktionen, Spundwände oder Rumpfteile eines Schiffes. Bei solch großflächigen Bauteilen erhöhen sich entsprechend die Strukturgrößen der Strukturelemente im Vergleich zum Kraftfahrzeug-Bereich. Bei großen Materialstärken kann es auch erforderlich sein, die mechanische Umformung beispielsweise von Metallen in erhitztem/glühendem Zustand durchzuführen, um die Umformenergie herabzusetzen.

Bevorzugt wird die Sandwich-Konstruktion im Kraftfahrzeug-Bereich im Automobilbau beispielsweise als Motorhaube verwendet, wobei bevorzugt das Abdeckelement als Außenhaut fungiert. Typische Karosseriebauformen sind heutzutage die selbsttragende Karosserie und die Skelettbauweise, die auch als Space Frame bezeichnet wird. Die Vorteile der selbsttragenden Karosserie, die ab der 1950er Jahre die Rahmenbauweise abgelöst hat, sind ein geringeres Gewicht durch Wegfall des Rahmens, höhere Aufprallsicherheit und bessere Raumausnutzung. Bedingt wurde der serienmäßige Einsatz dieser Bauform durch Fortschritte in der Blechverarbeitung wie Tiefziehen und besonders Punktschweißen. Die Steifheit, die normalerweise der Rahmen gewährleistet, wird hierbei durch die kompakte Blechhaut und hohle Blechquerschnitte mit möglichst großem Querschnitt und somit Widerstandsmoment erreicht z. B. Schweller oder A-, B- und C-Säule. Sicken erhöhen die Steifigkeit und die Eigenschwingungsfrequenz, um Resonanz und damit ein Dröhnen zu verhindern. Seit einigen Jahren ist die Skelettbauweise aufgekommen, bei der geschlossene Hohlprofile, die direkt oder über Knoten miteinander verbunden sind, das Skelett des Fahrzeugs bilden. Flächige Bauteile wie das Dach oder die Windschutzscheibe können steif mit dem Skelett verbunden sein und Schubkräfte aufnehmen. Dadurch wird bei relativ geringerem Gewicht eine relativ hohe Steifigkeit erreicht. Eine hohe Steifigkeit ist wichtig, um elastische Verformungen an Fugen zu Anbauteilen gering zu halten und Knarzgeräusche im Fahrbetrieb zu vermeiden. Geringe Spaltmaße sind deshalb nur bei sehr steifen Karosserien möglich. Ferner hat die Steifigkeit Einfluss auf das Fahrverhalten, besonders auf schlechten Straßen oder in Extremsituationen. Um Schwingungsanregungen durch Motor und Fahrwerk zu widerstehen, muss die Eigenfrequenz der Karosserie entsprechend abgestimmt werden. Um die gegenwärtigen Anforderungen an die Stabilität wie z.B. Crashverhalten, Gewicht und Aussehen der Karosserie zu erfüllen, wurden viele neue Stahlsorten entwickelt, die entweder sehr weich und gut verformbar z. B. IF-(Interstitial Free-) Stahl oder bei akzeptablen Umformeigenschaften trotzdem sehr viel fester sind z. B. DP- (Dualphasen-) Stahl. Trotz der höheren Dichte gegenüber anderen Materialien kann durch eine geeignete Kombination von Stahlteilen eine Karosserie hergestellt werden, die nicht schwerer, aber dafür billiger herzustellen ist als aus Leichtmetallen, die weniger fest und steif sind als Stahl.

Dies ist u.a. auch durch die Anwendung von Tailored Blank Verfahren möglich bei dem ein Blech aus verschiedenen Werkstoffgüten und Blechdicken zusammengesetzt ist. Dieses vorgefertigte Halbzeug wird anschließend zur Abstandsstruktur oder zum Abdeckelement umgeformt.

Das Problem in der Automobilindustrie ist, großflächige dreidimensional geformte Sandwich-Konstruktionen einfach und kostengünstig herzustellen. Insbesondere für Sandwich-Konstruktionen, die auf Blechteile zurückgreifen und Faserverbundwerkstoffe meiden, sind nur sehr aufwändige Konstruktionen bekannt. Durch ihr flexibles Design und ihre einfache Herstellung eignet sich die erfindungsgemäße Sandwich-Konstruktion besonders für den Karosseriebau.

Bevorzugt sind die Materialbahn und das Abdeckelement aus tafelförmigen Materialien, bevorzugt Metallblechen, gefertigt. Ausgangsmaterialien für die Materialbahn und das Abdeckelement können sein: Metall z.B. Stahl, Aluminium, Magnesium und deren Legierungen, Verbundwerkstoffe, Kunststoff- oder Holz-Platten, Faserverbundwerkstoffe oder Sandwich-Hybride aus den vorangehend genannten Werkstoffen.

Neben Stahl, Aluminium, Magnesium und deren Legierungen eignen sich auch andere leichte Verbundwerkstoffe und Metalle als Ausgangsmaterialien für die Abstandsstruktur und/oder das Abdeckelement. Geeignete Verbundwerkstoffe sind z.B. Litecore ^{®} oder Tribond ^{®} der Firma Thyssenkrupp Steel Europe AG, Duisburg, Deutschland. Geeignete Faserverbundwerkstoffe sind z.B. CFK (Kohlenstofffaserverstärkter Kunststoff) oder GFK (Glasfaserverstärkter Kunststoff).

Eine bevorzugte Materialdicke für die Ausgangsmaterialien in Form der tafelförmigen Materialbahn und/oder des tafelförmigen Abdeckelements bei Verwendung der Abstandsstruktur oder der Sandwich-Konstruktion im KFZ-Bereich ist 0,10 mm bis 10,00 mm, bevorzugter 0,20 mm bis 2,00 mm, noch bevorzugter 0,25 mm bis 0,60 mm.

Eine bevorzugte Strukturelement-Größe bei Verwendung der Abstandsstruktur oder der Sandwich-Konstruktion im KFZ-Bereich ist 5 mm bis 300 mm, bevorzugter 10 mm bis 100 mm, noch bevorzugter 20 mm bis 40 mm.

Ein kleinster Abstand zwischen den Strukturelementen bei Verwendung der Abstandsstruktur oder der Sandwich-Konstruktion im KFZ-Bereich ist bevorzugt 1 mm bis 300 mm, bevorzugter 2 mm bis 30 mm, noch bevorzugter 4 mm bis 10 mm.

Eine bevorzugte Ausprägehöhe bei Verwendung der Abstandsstruktur oder der Sandwich-Konstruktion im KFZ-Bereich ist bevorzugt 1 mm bis 100 mm, bevorzugter 3 mm bis 30 mm, noch bevorzugter 5 mm bis 20 mm.

Bei Verwendung der Abstandsstruktur oder der Sandwich-Konstruktion in anderen Technologiefeldern können die Materialdicke, Kernelement-Größe, der kleinste Abstand zwischen den Kernelementen und die bevorzugte Ausprägehöhe von den für die KFZ-Anwendung genannten Abmessungsbereichen abweichen.

Weiterhin betrifft die Erfindung ein Verfahren zur Herstellung der Abstandsstruktur nach einer oder mehrerer der vorstehend beschriebenen Ausführungsformen, aufweisend folgende Schritte:
- Bereitstellen einer Materialbahn, ausbildend eine erste Ebene;
- Herstellen von Schnitten mit einem ersten Schenkel und einem an den ersten Schenkel anschließenden zweiten Schenkel in der Materialbahn, wobei die Schnitte derart angeordnet sind, dass eine Vielzahl Auflageplateaus entlang einer Drehrichtung senkrecht zur Materialbahn betrachtet von den Schnitten umschlossen wird und wobei von den Auflageplateaus betrachtet erste Schenkel und zweite Schenkel einander in Drehrichtung folgender Schnitte parallel oder in einem spitzen Winkel derart zueinander verlaufen, dass dadurch in der Materialbahn Beabstandungselemente ausgebildet werden, die zwischen dem mindestens einen Auflageplateau und der umgebenen ersten Ebene der Materialbahn verlaufen.

Erfindungsgemäß vorgesehen ist ein Biegen der Materialbahn im Bereich der Auflageplateaus derart, dass die Auflageplateaus von der ersten Ebene beabstandet und in Relation zur ersten Ebene verdreht und zum anderen die Beabstandungselemente durch das Biegen um ihre Erstreckungsrichtung verwunden werden.

Bevorzugt erfolgt das Einbringen der Schnitte in die Materialbahn mittels Scherschneiden, Laserschneiden, Wasserstrahlschneiden oder Ausstanzen. Diese Prozesse sind mit keinem, mit einem geringen mikroskopischen oder mit einem gewissen makroskopischen Materialverlust der Materialbahn verbunden. In einer bevorzugten Ausführungsform ist der erste Schenkel der Schnitte als langer erster Schenkel ausgebildet im Vergleich zum zweiten Schenkel, der als kurzer zweiter Schenkel ausgebildet ist, wobei die Schnitte derart in die Materialbahn eingebracht werden, dass sie, vom langen ersten Schenkel zum kurzen zweiten Schenkel hin betrachtet, eine gleiche Drehrichtung aufweisen, die im Uhrzeigersinn oder entgegen dem Uhrzeigersinn orientiert ist.

In einer bevorzugten Ausführungsform des Herstellungsverfahrens wird im Anschluss an das Biegen der Materialbahn ein Tiefziehschritt und/oder ein weiterer Biegeschritt durchgeführt. Durch den Tiefziehschritt und/oder Biegeschritt wird bevorzugt eine räumliche Lage oder die Form der Auflageplateaus verändert werden. Als Tiefziehen wird das Zugdruckumformen eines Bauteils durch eine Tiefziehpresse bezeichnet, die beispielsweise Formwerkzeuge wie Halter oder Stempel, Wirkmedien wie Flüssigkeiten oder Gase oder Wirkenergie wie Hochgeschwindigkeitsumformen einsetzt. Der Biegeschritt kann bis zu einem Biegewinkel von ca. 60° automatisch erfolgen, wenn auf das Auflageplateau gedrückt wird. Die Änderung der räumlichen Lage und/oder Veränderung der Auflageplateauform kann in einem Schritt mit einem Herausbiegen der Beabstandungselemente erfolgen. Das Verfahren kann daher ein forciertes Drehen des oder der Auflageplateaus umfassen, bei dem die Verwindung der Beabstandungselemente noch weitergeführt wird. Dabei nimmt eine Ausprägehöhe des oder der Kernelemente ab. Im Sinne der vorliegenden Erfindung ist eine durch das Umformen herbeigeführte Veränderung der Materialstärke der Materialbahn von weniger als 10% noch als Biegen und noch nicht als Tiefziehen anzusehen.

Bevorzugt wird das Verfahren als in-line-Verfahren mittels Exzenter- oder Spindelpressen oder einer Rotationsstanze und einer nachfolgenden Ausbiegevorrichtung durchgeführt. Dadurch kann die Abstandsstruktur kontinuierlich in hoher Qualität bei geringen Kosten hergestellt werden.

Das Bearbeiten der Materialbahn mittels Exzenter- oder Spindelpressen umfasst ein Hub-Schneid- und ggf. Umform-Verfahren, das bevorzugt mit einem Folgeverbundwerkzeug erfolgt. Dabei wird die Materialbahn im Folgeverbundwerkzeug so lange um die jeweilige Vorschublänge durch das Werkzeug getaktet, bis eine letzte Station erreicht ist. Bei den mehreren Arbeitshüben werden in den einzelnen Stationen des Stanzwerkzeugs die Kernelemente sukzessive hergestellt und die Innen- und Außenform gebildet. Die einzelnen Arbeitshübe können Schnitte, Ausstanzungen, Bördelungen, Ausprägeschritte oder Tiefziehschritte umfassen.

Das Bearbeiten der Materialbahn mittels der Rotationsstanze umfasst ein rotierendes Schneid-Verfahren, bei dem die Materialbahn zwischen zwei rotierenden Stanzelementen wie Walzen durchgeführt wird, während eines der Stanzelemente gegen das andere gedrückt wird, um einen Ausstanzvorgang zur Herstellung der Schnitte durchzuführen. Vorteile einer Rotationsstanze sind eine relativ hohe Produktionsgeschwindigkeit und ein relativ geringer Stanzdruck. Üblicherweise weist eine Rotationsstanze einen Stempel oder eine Matrize auf. Eines der Stanzelemente kann aber beispielsweise ein oder mehrere Klingen aufweisen. Die Ausbiegevorrichtung kann ebenfalls zwei rotierende Walzen aufweisen, wobei einer der Walzen Ausprägungen aufweist, so dass während die Materialbahn durch die beiden Walzen durchgeführt wird und eine Walze gegen die andere gedrückt wird, ein Biegevorgang stattfindet.

Alternativ können die einzelnen Arbeitsschritte alle oder teilweise in separaten Werkzeugen und/oder verschiedenen Pressen erfolgen.

Bevorzugt umfasst das Herstellungsverfahren weiterhin einen Verfahrensschritt zum Härten und/oder Presshärten. Der Schritt des Härtens und/oder Presshärtens kann als separater, dem Biegen nachgelagerter Schritt oder in den Biegeschritt integriert werden.

Möglich ist das Presshärten, das auch als Formhärten bezeichnet wird, wenn die Abstandsstruktur aus einem hoch- oder höchstfesten Stahl ausgebildet ist. Dadurch wird insbesondere die Herstellung dünnerer, damit leichterer Karosseriebauteile bei gleicher Crashsicherheit ermöglicht. Dafür geeignet sind insbesondere kommerziell erhältliche Stahlsorten mit Zugfestigkeiten von 1500 MPa und mehr. Beim Presshärten wird das Material zunächst in einem Durchlaufofen bei ungefähr 950°C austenitisiert. Dadurch ändert sich die Kristallgitterstruktur des Stahls. Das dann glühende Material wird in eine Presse eingelegt, die mit einem speziellen, wassergekühlten Umformwerkzeug ausgestattet ist. Zunächst beginnt der Umformprozess beim Presshärten wie bei anderen Umformverfahren auch: Während die Presse schließt, formt das Werkzeug das Material um. Allerdings hält beim Presshärten die Presse nach Erreichen des unteren Totpunktes das Werkzeug weiter geschlossen. In dieser Haltezeit wird das Material abgeschreckt und die Wärme in wenigen Sekunden über das Werkzeug abgeführt. Die Haltezeit beträgt für gewöhnlich weniger als 20 Sekunden und ist unter anderem von Bauteiloberfläche, Menge des Materials, Wärmeleitfähigkeit des Werkzeugstahls und der gewünschten Bauteilhärte abhängig. Nach der Haltezeit wird das Bauteil mit einer Temperatur zwischen 150 und 250 °C entnommen. Durch die rasche Abkühlung bildet sich eine martensitische Gefügestruktur im Stahl aus, die für eine hohe Härte sorgt. Deshalb werden mittels Presshärten hergestellte Bauteile üblicherweise anschließend mit Lasermaschinen beschnitten.

Die Sandwich-Konstruktion kann nach dem Fügen gehärtet werden oder die Abstandsstruktur und/oder das Abdeckelement werden vor dem Fügeprozess zum Fügen der Abstandsstruktur mit dem Abdeckelement gehärtet. Zum Härten eignen sich eine Reihe von Materialien, unter anderem sogenannte Mangan-Bor-Stähle. Der Härteprozess kann lokal erfolgen. Alternativ kann nach einem Härteprozess durch Aufheizen die Härte lokal wieder genommen werden. Der Prozess des Presshärtens kann auch lokal durchgeführt werden. Dann wird das Presswerkzeug nur lokal gekühlt.

Nachfolgend wird die Erfindung unter Bezugnahme auf beigefügte Zeichnungen einiger bevorzugter Ausführungsformen detaillierter erläutert. Es zeigen schematisch und nicht maßstabsgerecht
- Fig. 1: eine Draufsicht auf eine Materialbahn mit darin angeordneten Schnitten für einen Ausschnitt einer ersten Ausführungsform der Abstandsstruktur, aus der sich ein Auflageplateau mit drei Beabstandungselementen ausprägen lässt;
- Fig. 2: eine perspektivische Ansicht eines Ausschnitts einer ersten Ausführungsform der Abstandsstruktur mit drei Beabstandungselementen, ausgeprägt aus einer ähnlich zu der in Figur 1 gezeigten Materialbahn;
- Fig. 3: eine weitere perspektivische Ansicht eines Ausschnitts der ersten Ausführungsform der Abstandsstruktur mit einem Auflageplateau mit drei Beabstandungselementen ähnlich zu der in Figur 2 gezeigten Variante;
- Fig. 4: eine Draufsicht auf eine weitere Materialbahn mit einer Vielzahl darin angeordneter Schnitte gemäß der Anordnung aus Figur 1;
- Fig. 5: eine Draufsicht auf eine weitere Materialbahn mit Schnitten für das Ausprägen eines Auflageplateaus mit zwei Beabstandungselementen;
- Fig. 6: eine Draufsicht auf eine weitere Materialbahn mit einer Vielzahl der gemäß Figur 5 räumlich angeordneten Schnitte;
- Fig. 7: eine Draufsicht auf eine weitere Materialbahn mit einer Vielzahl von Schnitten, mit der sich eine Vielzahl von Auflageplateaus mit jeweils vier Beabstandungselementen ausprägen lässt;
- Fig. 8: eine Draufsicht auf eine Materialbahn mit vier Schnitten mit der sich ein Auflageplateau mit vier Beabstandungselementen ausprägen lässt;
- Fig. 9: eine Draufsicht auf eine weitere Materialbahn mit vier Schnitten deren Drehrichtung im Vergleich zur Figur 8 umgekehrt angeordnet sind;
- Fig. 10: eine Draufsicht auf eine ausgeprägtes Auflageplateau gemäß einer zweiten Ausführungsform mit vier Beabstandungselementen;
- Fig. 11: eine perspektivische Ansicht des in Fig. 10 gezeigten ausgeprägten Auflageplateaus;
- Fig. 12: eine Draufsicht auf eine weitere Materialbahn mit fünf Schnitten mit der sich ein Auflageplateau mit fünf Beabstandungselementen ausprägen lässt;
- Fig. 13: eine perspektivische Ansicht einer Abstandsstruktur gemäß einer dritten Ausführungsform mit fünf Beabstandungselementen ausgeprägt aus einer Materialbahn, die fünf ähnlich zur Figur 12 angeordnete Schnitte aufweist;
- Fig. 14: eine Draufsicht auf eine weitere Materialbahn mit einer Vielzahl von Schnitten gemäß Figur 12;
- Fig. 15: eine schematische Querschnittsansicht einer Sandwich-Konstruktion gemäß einer ersten Ausführungsform;
- Fig. 16: eine schematische Querschnittsansicht einer Sandwich-Konstruktion gemäß einer zweiten Ausführungsform;
- Fig. 17: eine schematische Darstellung eines Verfahrens zur Herstellung einer Abstandsstruktur;
- Fig. 18: ein Flussdiagram mit den einzelnen Arbeitsschritten zur Erzeugung einer Abstandsstruktur oder einer Sandwich-Konstruktion; und
- Fig. 19: eine perspektivische Ansicht einer Abstandstruktur gemäß einer vierten Ausführungsform;
- Fig. 20: eine perspektivische Ansicht einer Sandwich-Konstruktion gemäß einer dritten Ausführungsform;
- Fig. 21: eine perspektivische Ansicht einer Sandwich-Konstruktion gemäß einer vierten Ausführungsform;
- Fig. 22: eine perspektivische Ansicht einer Sandwich-Konstruktion gemäß einer fünften Ausführungsform;
- Fig. 23: eine perspektivische Ansicht einer Sandwich-Konstruktion gemäß einer sechsten Ausführungsform;
- Fig. 24: eine perspektivische Ansicht einer Sandwich-Konstruktion gemäß einer siebten Ausführungsform;
- Fig. 25: eine perspektivische Ansicht einer Sandwich-Konstruktion gemäß einer achten Ausführungsform;
- Fig. 26: eine Explosionsdarstellung der in Fig. 25 gezeigten Sandwich-Konstruktion;
- Fig. 27: eine Draufsicht auf eine Sandwich-Konstruktion gemäß einer neunten Ausführungsform;
- Fig. 28: eine Draufsicht auf eine Sandwich-Konstruktion gemäß einer zehnten Ausführungsform;
- Fig. 29: eine Draufsicht auf eine Sandwich-Konstruktion gemäß einer elften Ausführungsform; und
- Fig. 30: eine Draufsicht auf eine Sandwich-Konstruktion gemäß einer zwölften Ausführungsform.

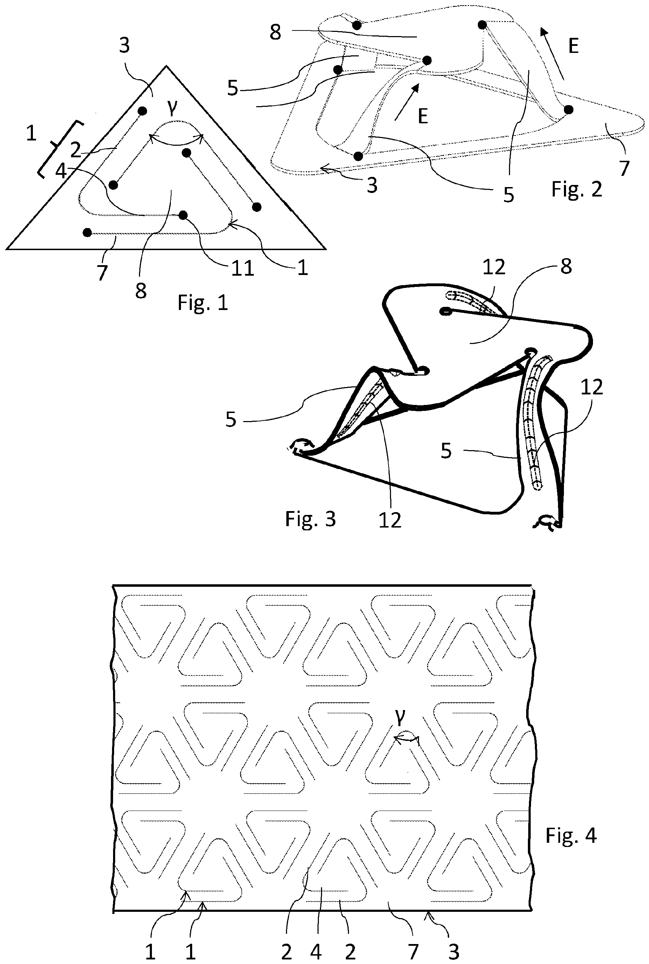

Fig. 1 zeigt eine Draufsicht auf eine Materialbahn. Die Materialbahn 3 ist in Draufsicht als dreieckförmige Tafel ausgebildet. Sie weist drei Schnitte 1 auf, die jeweils einen ersten Schenkel 2 und einen zweiten Schenkel 4 aufweisen, wobei der erste Schenkel 2 in den zweiten Schenkel 4 übergeht und zwischen einer Erstreckungsrichtung des ersten Schenkels 2 und einer Erstreckungsrichtung des zweiten Schenkels 4 ein Schnittwinkel γ eingeschlossen ist. Die Schnitte 1 sind um ein auszubildendes Auflageplateau 8 herum angeordnet. Der erste Schenkel 2 ist als langer erster Schenkel ausgebildet, im Vergleich zum zweiten Schenkel 4, der als kurzer zweiter Schenkel ausgebildet ist. Zwischen dem ersten Schenkel 2 jedes Schnitts 1 und einem benachbarten zweiten Schenkel 4 eines weiteren Schnitts 1 sind auszubildende Beabstandungselemente (in Figur 1 nicht mit Bezugszeichen versehen) angeordnet. Die kürzer ausgebildeten zweiten Schenkel 4 liegen jeweils zwischen dem auszubildenden Auflageplateau und einem auszubildendem Beabstandungselement. An jedem Ende jedes Schnitts 1 sind ein Bohr- oder Kragenlöcher ausgebildet, die schematisch als schwarze Punkte ohne Bezugszeichen dargestellt sind.

Fig. 2 zeigt eine perspektivische Ansicht eines Ausschnitts einer Abstandsstruktur gemäß einer ersten Ausführungsform. Der in Fig. 2 gezeigte Ausschnitt der Abstandsstruktur ist aus einer sehr ähnlich zu der in Fig. 1 ausgebildeten Materialbahn mittels Biege-Umformens hergestellt. Die mit drei Schnitten versehene Materialbahn 3 weist in Fig. 2 eine Materialbahnebene als eine erste Ebene 7 auf, wobei durch biegendes Umformen der in Fig. 1 gezeigten Materialbahn 3 abschnittsweise ein zu der ersten Ebene 7 beabstandetes und in einer zweiten Ebene angeordnetes Auflageplateau 8 ausgebildet worden ist. Im Übergangsbereich von der ersten Ebene 7 in die zweite Ebene (nicht mit Bezugszeichen versehen) verlaufen drei Beabstandungselemente 5 jeweils entlang einer zugehörigen Erstreckungsrichtung E von der ersten Ebene 7 in die zweite Ebene. Die Beabstandungselemente 5 beabstanden somit die erste Ebene 7 von dem Auflageplateau 8. Die Beabstandungselemente 5 weisen entlang ihrer Erstreckungsrichtung E eine durch das als Biegen durchgeführte Umformen der Materialbahn 3 hervor gerufene Verwindung um deren Erstreckungsrichtung E auf. Das Auflageplateau 8 und die Beabstandungselemente 5 bilden ein Kernelement für eine Sandwich-Konstruktion. Eine solche Sandwich-Konstruktion weist zusätzlich zur Abstandsstruktur ein als eine zweite Deckschicht ausgebildetes Abdeckelement auf, das an dem Auflageplateau 8 fixiert ist, während in der ersten Ebene liegende Materialbahnabschnitte eine erste Deckschicht der Sandwich-Konstruktion ausbilden. Das Auflageplateau 8 weist einen Plateau-Umfang auf. Die Beabstandungselemente 5 sind entlang des Plateau-Umfangs bevorzugt mit einer Abweichung weniger als 5 Grad gleichverteilt angeordnet.

Der gesamte Ausschnitt des Abstandselements ist einstückig ausgebildet. Die dargestellten Striche am Anfang und am Ende der drei Beabstandungselemente 5 sollen lediglich den räumlichen Übergang vom Beabstandungselement 5 zum Auflageplateau 8 oder zu den in der ersten Ebene liegenden Materialbahnabschnitte verdeutlichen. Bei einem realen aus einer einstückigen Materialbahn 3 gebildeten Abstandselement sind diese Übergänge wegen des einheitlichen Materials nicht erkennbar.

Fig. 3 zeigt eine weitere perspektivische Ansicht eines Ausschnitts der ersten Ausführungsform des Abstandselementes mit drei Beabstandungselementen 5 ähnlich zu der in Figur 2 gezeigten Variante. Im Unterschied zu der Variante aus Figur 2 sind hier die vorangehend nur als schwarze Kreise dargestellte Kragenlöcher und Bohrungen an den Enden der Schnitte detaillierter gezeigt. Weiterhin weist diese Variante des Abstandselementes Sicken 12 auf, die sich als Ausprägungen entlang der Beabstandungselemente 5 erstrecken und diese zusätzlich aussteifen.

Fig. 4 zeigt eine Draufsicht auf eine weitere Materialbahn 3. Die in Fig. 4 gezeigte Materialbahn 3 entspricht der in Fig. 1 gezeigten Materialbahn mit dem Unterschied, dass die Materialbahn 3 nicht als dreieckförmige Tafel sondern als rechteckige Tafel ausgebildet ist und nicht nur drei Schnitte 1 sondern eine Vielzahl von jeweils drei Schnitten 1 in der räumlichen Anordnung gemäß Fig. 1 aufweist, die jeweils um ein auszubildendes Auflageplateau (hier nicht mit Bezugszeichen versehen) herum angeordnet sind. Dadurch kann mittels der Materialbahn 3 eine Abstandsstruktur hergestellt werden, die eine Vielzahl von Kernelementen aufweist, indem jeweils das Auflageplateau durch biegende Umformung aus der ersten Ebene der Materialbahn 3 herausgebogen wird und dabei die jeweils drei Beabstandungselemente 5 entlang ihrer Erstreckungsrichtung verwunden werden.

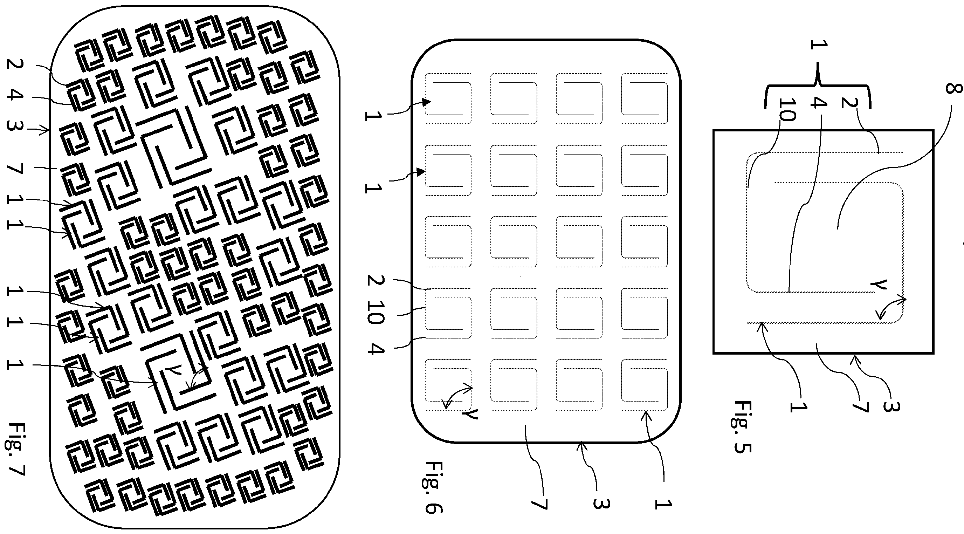

Fig. 5 zeigt eine Draufsicht auf einen Ausschnitt einer weiteren Materialbahn. Die in Fig. 5 gezeigte Ausschnitt der Materialbahn entspricht der in Fig. 1 gezeigten Materialbahn mit dem Unterschied, dass die Materialbahn 3 nicht als dreieckförmige Tafel sondern als rechteckige, insbesondere quadratische, Tafel ausgebildet ist und anstelle der drei Schnitte zwei Schnitte 1 aufweist und jeder Schnitt 1 neben dem ersten Schenkel 2 und dem zweiten Schenkel 4 einen zwischen ihnen angeordneten dritten Schenkel 10 aufweist. Durch Umformen dieser Materialbahn 3 kann eine Abstandsstruktur hergestellt werden, die jeweils zwei Beabstandungselemente für ein Auflageplateau 8 aufweist.

Fig. 6 zeigt eine Draufsicht auf eine noch weitere Materialbahn. Die in Fig. 6 gezeigte Materialbahn weist eine Vielzahl von jeweils zwei Schnitten 1 in der räumlichen Orientierung gemäß Fig. 5 auf, die jeweils um ein auszubildendes Auflageplateau (hier nicht mit Bezugszeichen versehen) herum angeordnet sind. Dadurch kann mittels der Materialbahn 3 eine Abstandsstruktur hergestellt werden, indem jeweils das Auflageplateau durch biegende Umformung aus der ersten Ebene der Materialbahn 3 herausgebogen wird und dabei die jeweils zwei Beabstandungselemente 5 entlang ihrer Erstreckungsrichtung verwunden werden. Das Abstandselement weist dadurch eine Vielzahl von Kernelementen auf.

Fig. 7 zeigt eine Draufsicht auf eine weitere Materialbahn. Die in Fig. 7 gezeigte Materialbahn 3 weist eine Vielzahl von vier Schnitten 1 auf, die jeweils um ein auszubildendes Auflageplateau (hier nicht mit Bezugszeichen versehen) herum angeordnet sind, wobei zwischen einer Erstreckungsrichtung des ersten Schenkels 2 und einer Erstreckungsrichtung des zweiten Schenkels 4 ein Schnittwinkel γ eingeschlossen ist, der im Wesentlichen rechtwinklig ist. Ferner weisen verschiedene Schnitte 1 verschiedene Längen der ersten Schenkel 2 und verschiedene Längen der zweiten Schenkel 4 auf. Eine aus dieser Materialbahn 3 hergestellte Abstandsstruktur weist daher Kernelemente unterschiedlicher Größe auf.

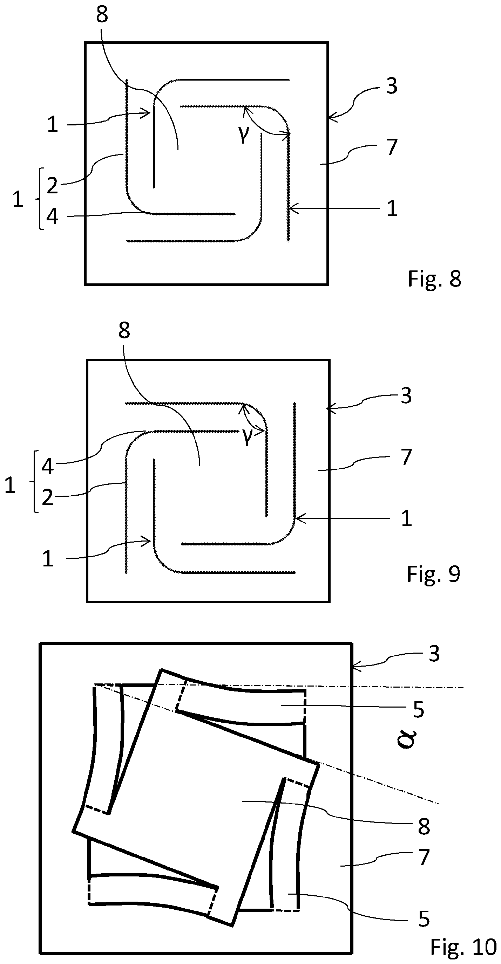

Fig. 8 zeigt eine Draufsicht auf einen Ausschnitt einer weiteren Materialbahn. Der in Fig. 8 gezeigte Ausschnitt der Materialbahn entspricht dem in Fig. 5 gezeigten Ausschnitt der Materialbahn mit dem Unterschied, dass sie vier Schnitte 1 mit jeweils einem ersten Schenkel 2 und einem zweiten Schenkel 4 aufweist, die um ein Auflageplateau 8 herum angeordnet sind. Aus dieser Materialbahn 3 ist eine Abstandsstruktur herstellbar, die vier

Beabstandungselemente aufweist. Die Schnitte 1 sind in einer Drehrichtung entgegen dem Uhrzeigersinn angeordnet.

Fig. 9 zeigt eine Draufsicht auf den Ausschnitt eine weitere Materialbahn. Der in Fig. 9 gezeigte Ausschnitt der Materialbahn entspricht der in Fig. 8 gezeigten Materialbahn mit dem Unterschied, dass die Schnitte 1 in einer Drehrichtung im Uhrzeigersinn angeordnet sind.

Fig. 10 zeigt eine Draufsicht auf einen Ausschnitt einer Abstandsstruktur gemäß einer zweiten Ausführungsform. Der in Fig. 10 gezeigte Ausschnitt der Abstandsstruktur ist aus der sehr ähnlich zur Fig. 8 gezeigten Materialbahn mittels eines Biegens aufweisenden Umformens hergestellt. Die mit vier Schnitten versehene Materialbahn 3 weist in Fig. 10 eine Materialbahnebene als eine erste Ebene 7 auf, wobei durch Umformen der in Fig. 1 gezeigten Materialbahn 3 abschnittsweise ein zu der ersten Ebene 7 beabstandetes und in einer zweiten Ebene angeordnetes Auflageplateau 8 gebildet wird. Im Übergangsbereich von der ersten Ebene 7 in die zweite Ebene verlaufen vier Beabstandungselemente 5 jeweils entlang einer Erstreckungsrichtung von der ersten Ebene 7 in die zweite Ebene. Die Beabstandungselemente 5 beabstanden somit die erste Ebene 7 vom Auflageplateau 8. Die Beabstandungselemente 5 weisen entlang ihrer Erstreckungsrichtung eine durch das als Biegen durchgeführte Umformen der Materialbahn 3 hervor gerufene Verwindung um deren Erstreckungsrichtung auf. Das Auflageplateau 8 und die Beabstandungselemente 5 bilden ein Kernelement für eine Sandwich-Konstruktion. Eine solche hier nicht gezeigte Sandwich-Konstruktion weist zusätzlich zur Abstandsstruktur ein als eine zweite Deckschicht ausgebildetes Abdeckelement auf, das mit dem Auflageplateau 8 fest verbunden ist, während in der ersten Ebene 7 liegende Materialbahnabschnitte eine erste Deckschicht der Sandwich-Konstruktion ausbildet.

Das aus der Materialbahn 3 herausgebogene Auflageplateau 8 weist in der Aufsicht auf die erste Ebene 7 einen Verdrehungswinkel α zur ersten Ebene 7 auf. Dieser Verdrehungswinkel α entsteht bei der biegenden Umformung verursacht durch das Aufstellen der Beabstandungselemente 5, die beim Herausdrücken des Auflageplateaus 8 aus der Materialbahn 3 entstehen.

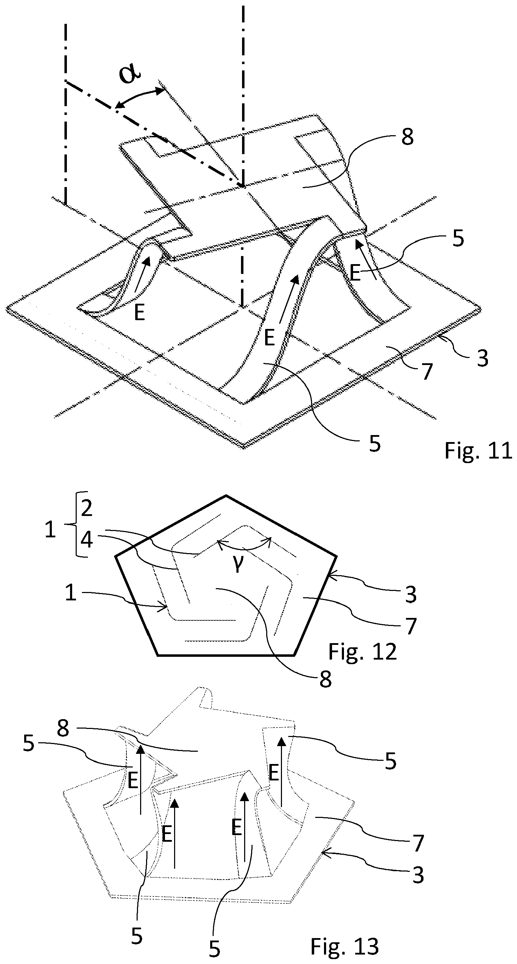

Fig. 11 zeigt eine perspektivische Ansicht des in Fig. 10 gezeigten Ausschnitts der Abstandsstruktur. Die Beabstandungselemente 5 sind jeweils um ihre Erstreckungsrichtung E verwunden. Das Abstandsplateau 8 ist im Wesentlichen parallel zur ersten Ebene 7 orientiert.

Fig. 12 zeigt eine Draufsicht auf einen Ausschnitt einer weiteren Materialbahn. Der in Fig. 12 gezeigte Ausschnitt der Materialbahn 3 entspricht dem in Fig. 1 gezeigten Ausschnitt der Materialbahn mit dem Unterschied, dass der Ausschnitt der Materialbahn 3 nicht als dreieckförmige Tafel sondern als fünfeckige Tafel ausgebildet ist und nicht nur drei Schnitte 1 sondern fünf Schnitte 1 aufweist, die um ein auszuprägendes Auflageplateau herum angeordnet sind.

Fig. 13 zeigt eine perspektivische Ansicht eines Ausschnitts einer Abstandsstruktur gemäß einer dritten Ausführungsform. Der in Fig. 13 gezeigte Ausschnitt der Abstandsstruktur ist aus der in Fig. 12 gezeigten Materialbahn mittels biegender Umformung hergestellt worden. Die mit fünf Schnitten versehene Materialbahn 3 weist in Fig. 13 eine Materialbahnebene als eine erste Ebene 7 auf, wobei durch Umformen der in Fig. 12 gezeigten Materialbahn 3 abschnittsweise ein zu der ersten Ebene 7 beabstandetes und in einer zweiten Ebene angeordnetes Auflageplateau 8 ausgeprägt wird. Im Übergangsbereich von der ersten Ebene 7 in die zweite Ebene verlaufen fünf Beabstandungselemente 5 jeweils entlang ihrer individuellen Erstreckungsrichtung E von der ersten Ebene 7 in die zweite Ebene. Die Beabstandungselemente 5 beabstanden somit die erste Ebene 7 vom Auflageplateau 8. Die Beabstandungselemente 5 weisen entlang ihrer jeweiligen Erstreckungsrichtung E eine durch das als Biegen durchgeführte Umformen der Materialbahn 3 hervorgerufene Verwindung um ihre Erstreckungsrichtung E auf. Das Auflageplateau 8 und die

Beabstandungselemente 5 bilden wie die vorangehend beschriebenen Abstandselemente ein Kernelement für eine Sandwich-Konstruktion.

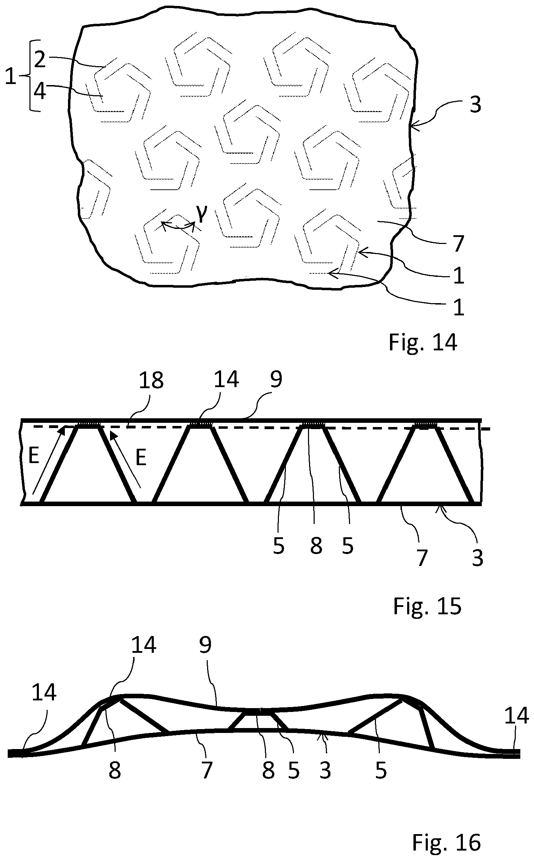

Fig. 14 zeigt eine Draufsicht auf eine weitere Materialbahn. Die in Fig. 14 gezeigte Materialbahn ist als rechteckige Tafel ausgebildet und weist eine Vielzahl von jeweils fünf Schnitten 1 auf, die jeweils um ein auszubildendes Auflageplateau herum angeordnet sind. Dadurch kann mittels der Materialbahn 3 eine Abstandsstruktur hergestellt werden, die eine Vielzahl an Kernelementen mit jeweils fünf Beabstandungselementen aufweist.

Fig. 15 zeigt eine schematische Querschnittsansicht einer Sandwich-Konstruktion gemäß einer ersten Ausführungsform. Die Sandwich-Konstruktion weist eine Abstandsstruktur und ein Abdeckelement 9 auf. Das Abdeckelement 9 ist tafelförmig ausgebildet. Die Abstandsstruktur ist gebildet aus einer mit einer Mehrzahl von Schnitten versehenen Materialbahn 3 aufweisend eine Materialbahnebene als eine erste Ebene 7, wobei durch biegendes Umformen der Materialbahn 3 abschnittsweise mehrere zu der ersten Ebene 7 beabstandete und in einer zweiten Ebene 18 angeordnete Auflageplateaus 8 gebildet sind. Im Übergangsbereich von der ersten Ebene 7 in die zweite Ebene 18 verlaufen Beabstandungselemente 5 jeweils entlang einer Erstreckungsrichtung E von der ersten Ebene 7 in die zweite Ebene 18 und beabstanden jeweils die erste Ebene 7 von einem der Auflageplateaus 8. Die Beabstandungselemente 5 weisen entlang ihrer Erstreckungsrichtung E eine durch das als Biegen durchgeführte Umformen der Materialbahn 3 ausgebildete Verwindung um deren Erstreckungsrichtung E auf, was hier der Übersichtlichkeit halber nicht gezeigt ist. Das Abdeckelement 9 und jedes Auflageplateau 8 sind miteinander an Fügestellen 14 verbunden, wobei das Abdeckelement 9 in einer dritten Ebene liegt. Das Abdeckelement 9 bildet eine zweite Deckschicht der Sandwich-Konstruktion, während Materialbahnabschnitte der Materialbahn 3, die in der ersten Ebene 7 liegen, eine erste Deckschicht der Sandwich-Konstruktion bilden. Die Beabstandungselemente 5 und die Auflageplateaus 8 bilden Kernelemente, die zwischen den beiden Deckschichten angeordnet sind. Diese Kernelemente können zwei, drei, vier, fünf oder mehr Beabstandungselemente aufweisen. Die mehreren Auflageplateaus 8 bilden zusammen die zweite Ebene 18, die zur ersten Ebene 7 beabstandet ist. Die erste Deckschicht und die zweite Deckschicht sind vorliegend eben ausgebildet und planparallel zueinander angeordnet.

Fig. 16 zeigt eine schematische Querschnittsansicht einer Sandwich-Konstruktion gemäß einer zweiten Ausführungsform. Die in Fig. 16 gezeigte Sandwich-Konstruktion entspricht der in Fig. 15 gezeigten Sandwich-Konstruktion mit dem Unterschied, dass sowohl das Abdeckelement 9 als auch die nach dem Umformen der Materialbahn 3 in der ersten Ebene 7 verbleibenden Materialbahnabschnitte gewölbt sind. Diese Durchbiegung ist hier nur zweidimensional dargestellt und kann ebenso in die dritte Dimension, d.h. in die Zeichenebene hinein ausgeformt sein. Dabei sind die Auflageplateaus 8 an den Fügestellen 14 möglichst parallel zum Abdeckelement 9 ausgebildet. Die Auflageplateaus 8 sind jeweils zum Abdeckelement 9 geneigt. Beide Deckschichten sind unterschiedlich gewölbt. Die Wölbung des Abdeckelements 9 ist rein beispielhaft wellenförmig. Die erste Deckschicht und die zweite Deckschicht sind an ihren Rändern an Fügestellen 14 miteinander verbunden.

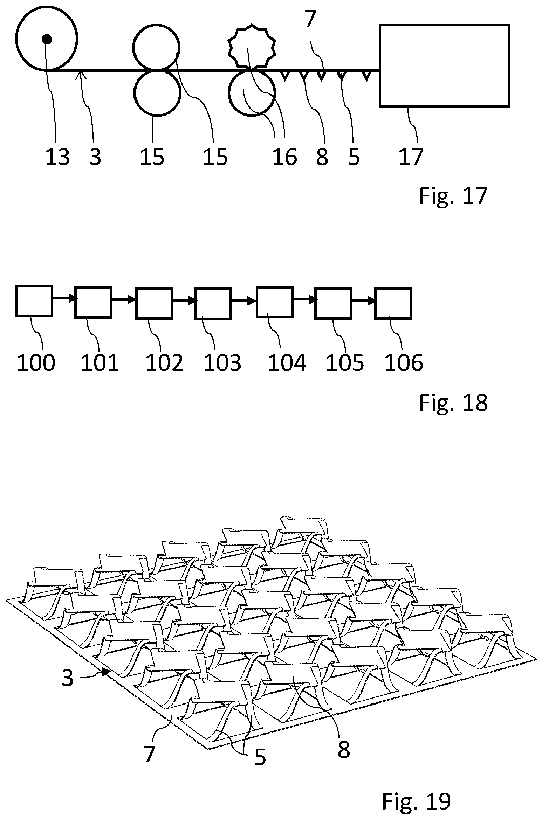

Fig. 17 zeigt eine schematische Darstellung eines Verfahrens zur Herstellung einer Abstandsstruktur. Eine Materialbahn 3 befindet sich auf einer Rolle 13 (Coil) und wird abgerollt und durch eine Rotationstanze mit Walzen 15 geführt, wodurch Schnitte in die Materialbahn 3 eingebracht werden. Wenn komplexe Schnittmuster zu realisieren sind, kann es erforderlich sein weitere Walzenpaare vorzusehen, so dass die Summe der Walzenpaare die Summe der Schnitte realisiert.

Nach dem Durchlaufen der Walzen 15 zum Ausbilden der Schnitte wird die Materialbahn 3 weiter durch eine Ausbiegevorrichtung mit einem Walzenpaar 16 durchgeführt, die die Materialbahn 3 mittels eines Biegevorgangs umformen, so dass aus der Materialbahn 3 eine Abstandsstruktur gemäß den vorangehend beschriebenen Ausführungsformen oder als Kombination dieser geprägt wird, die Materialbahnabschnitte in einer ersten Ebene 7, Auflageplateaus 8 in einer zweiten Ebene und dazwischen angeordnete Beabstandungselemente 5 aufweist. Anschließend wird die Abstandsstruktur einer weiteren Bearbeitungsstation 17 zugeführt. In der Bearbeitungsstation 17 kann die Abstandsstruktur weiteren BearbeitungsSchritten unterzogen werden, ausgewählt beispielsweise aus der Gruppe von Härt-, Presshärt-, Tiefzieh- und/oder Biegeschritten und/oder die Abstandsstruktur wird in einem Fügeschritt mit einem Abdeckelement (nicht gezeigt) gefügt , um eine Sandwich-Konstruktion herzustellen. Das Herstellungsverfahren ist bevorzugt als in-line-Verfahren für die kosteneffiziente Massenproduktion realisiert.

Fig. 18 zeigt ein Flussdiagram bei dem die einzelnen Arbeitsschritte zur Erzeugung einer Abstandsstruktur oder einer Sandwich-Konstruktion. Zuerst wird in einem Schritt 100 eine Materialbahn bereitgestellt, die eine erste Ebene ausbildet. Dann kann ein optionaler Schritt 101 durchgeführt werden, um Bohrungen an vorbestimmten Stellen in der Materialbahn zu erzeugen.

In einem weiteren optionalen Schritt 102 werden die in dem optionalen Schritt 101 erzeugten Bohrungen umgebördelt oder ausgekragt.

In dem anschließenden Schritt 103 werden Schnitte mit einem ersten Schenkel und einem an den ersten Schenkel anschließenden zweiten Schenkel in der Materialbahn hergestellt, wobei die Schnitte derart angeordnet sind, dass die Auflageplateaus jeweils entlang einer Drehrichtung senkrecht zur Materialbahn betrachtet von den Schnitten umschlossen werden und wobei vom Auflageplateau betrachtet erste Schenkel und zweite Schenkel einander in Drehrichtung folgender Schnitte parallel oder in einem spitzen Winkel derart zueinander verlaufen, dass dadurch in der Materialbahn Beabstandungselemente ausgebildet werden, die zwischen den Auflageplateaus und der umgebenen ersten Ebene der Materialbahn verlaufen. Abhängig von der Komplexität des zu verwirklichenden Schnittmusters kann es erforderlich sein, dass im Verfahrensschritt 103 die Schnitte sukzessiv nacheinander in die Materialbahn eingebracht werden.

Wenn der Schritt 101 durchgeführt wurde, werden die Schnitte in dem Schritt 103 derart erzeugt, dass die Bohrungen an Enden der Schnitte liegen.

In einem optionalen Schritt 104 werden ggf. weitere Schneidprozesse durchgeführt, beispielsweise werden weitere Schnitte hergestellt, die zur Erzeugung einer oder mehrerer Brücken in einem weiteren Schritt 105 dienen. In dem anschließenden Schritt 106 wird die Materialbahn im Bereich der Auflageplateaus derart biegend umgeformt, dass die Auflageplateaus von der ersten Ebene beabstandet und die Beabstandungselemente durch das Biegen um ihre jeweiligen Erstreckungsrichtungen verwunden werden.

Fig. 19 zeigt eine perspektivische Ansicht einer großflächigen Abstandstruktur gemäß einer vierten Ausführungsform. Die Abstandsstruktur weist eine Materialbahn 3 auf, und ist mittels mindestens eines Umformschritts hergestellt, der Biegen umfasst. Die Materialbahn 3 weist die Materialbahnebene als eine erste Ebene 7 auf, wobei durch Einschneiden und Umformen aus dieser Materialbahn heraus eine Vielzahl Kernelemente, wie in Figur 11 gezeigt, mit je einem Auflageplateaus 8 aus der Materialbahn im Uhrzeigersinn herausgebogen und herausgedreht werden. Die Auflageplateaus 8 sind zu der ersten Ebene 7 beabstandet und in einer zweiten Ebene angeordnet. Im Übergangsbereich von der ersten Ebene 7 in die zweite Ebene verlaufen eine Vielzahl von Beabstandungselementen 5 jeweils entlang einer Erstreckungsrichtung von der ersten Ebene 7 in die zweite Ebene. Die Beabstandungselemente 5 beabstanden somit die erste Ebene 7 vom Auflageplateau 8. Die Beabstandungselemente 5 weisen entlang ihrer Erstreckungsrichtung eine durch das als Biegen durchgeführte Umformen der Materialbahn 3 hervorgerufene Verwindung um deren Erstreckungsrichtung auf. Die Auflageplateaus 8 und die Beabstandungselemente 5 bilden Kernelemente für mehrteilige Sandwich-Konstruktionen, von denen Beispiele mit unterschiedlichen Varianten hinsichtlich Anzahl, Anordnung und Drehsinn der Auflageplateaus 8 in den folgenden Figuren gezeigt sind.

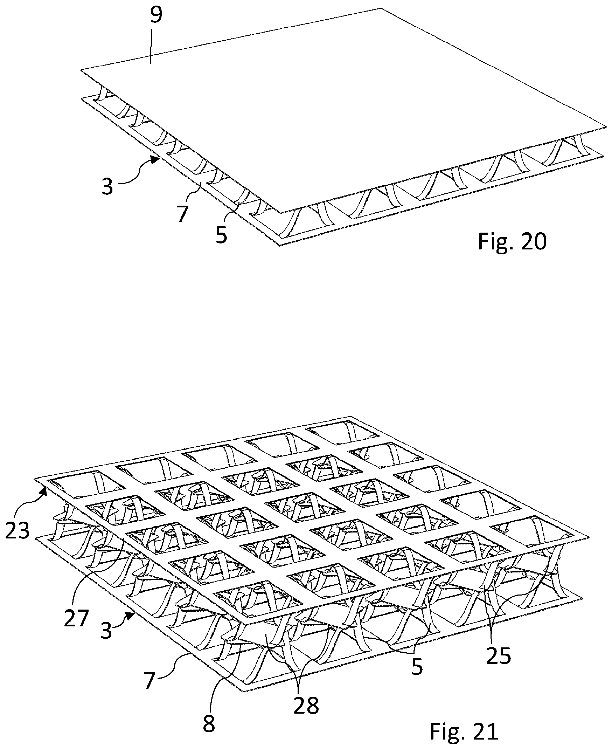

Fig. 20 zeigt eine perspektivische Ansicht einer Sandwich-Konstruktion gemäß einer dritten Ausführungsform. Die Sandwich-Konstruktion weist die in Fig. 19 gezeigte Abstandsstruktur und ein Abdeckelement 9 auf. Das Abdeckelement 9 ist mit der Vielzahl an Auflageplateaus (hier nicht zu sehen) verbunden. Dazu ist das Abdeckelement 9 zum Beispiel stoffschlüssig mit den Auflageplateaus 8 verklebt oder verschweißt und bildet eine zweite Deckschicht, während die in der ersten Ebene 7 liegenden Materialbahnen 3 die erste Deckschicht bilden.

Fig. 21 zeigt eine perspektivische Ansicht einer Sandwich-Konstruktion gemäß einer vierten Ausführungsform. Die Sandwich-Konstruktion weist die in Fig. 19 gezeigte Abstandsstruktur als erste Abstandsstruktur auf, die an ihrer ersten Ebene 7 an der weiteren ersten Ebene 27 einer weiteren Abstandsstruktur fixiert ist. Die weitere Abstandsstruktur weist eine weitere Materialbahn 23 auf, wobei die weitere Abstandsstruktur auf die gleiche Weise wie die erste Abstandsstruktur hergestellt ist. Die weitere Abstandsstruktur zeigt eine weitere erste Ebene 27 und eine Vielzahl weiterer Abstandsplateaus 28, wobei die weiteren Abstandsplateaus 28 aus der weiteren ersten Ebene 27 über eine Vielzahl weiterer Beabstandungselemente 25 herausgedreht sind. In Ausformungsrichtung betrachtet weisen die weiteren Abstandsplateaus 28 den gleichen Drehsinn auf wie die Abstandsplateaus 8 der anderen Abstandsstruktur. Die Auflageplateaus 8 und die weiteren Auflageplateaus 28 sind beispielsweise stoffschlüssig miteinander verbunden. Die Auflageplateaus 8 und die weiteren Auflageplateaus 28 weisen in der Aufsicht auf das gefügte Bauteil in Form der Sandwich-Konstruktion einen einander entgegen gesetzten Drehsinn auf, d.h. die Auflageplateaus 8 sind im Uhrzeigersinn aus der Materialbahn 3 herausgedreht und die weiteren Auflageplateaus 28 sind entgegen dem Uhrzeigersinn aus der weiteren Materialbahn 23 herausgedreht. Dadurch, dass die Auflageplateaus 8 und die weiteren Auflageplateaus 28 aneinander fixiert sind, können die Auflageplateaus 8 und die weiteren Auflageplateaus 28 nicht entlang ihres entgegen gesetzten Drehsinns aneinander gleiten. Die Sandwich-Konstruktion bleibt somit formstabil und kann in Richtung ihrer Dicke nicht komprimiert werden. Die in der ersten Ebene liegende Materialbahn 3 bildet die erste Deckschicht, während die in der weiteren ersten Ebene 27 liegende Materialbahn 23 die zweite Deckschicht der Sandwich-Konstruktion bildet.

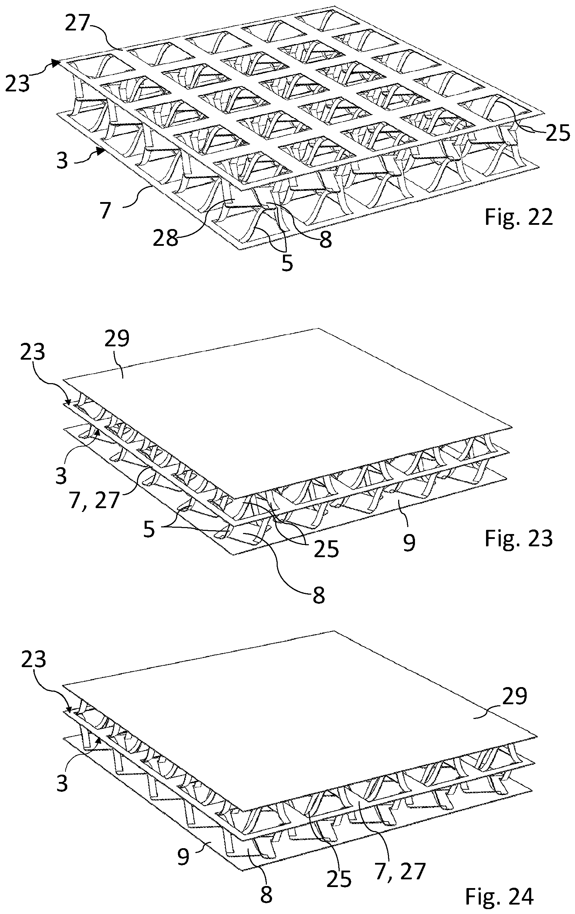

Fig. 22 zeigt eine perspektivische Ansicht einer Sandwich-Konstruktion gemäß einer fünften Ausführungsform. Die in Fig. 22 gezeigte Sandwich-Konstruktion entspricht der in Fig. 21 gezeigten Sandwich-Konstruktion mit dem Unterschied, dass in der Aufsicht auf die Sandwich-Konstruktion betrachtet die weiteren Auflageplateaus 28 im gleichen Drehsinn, nämlich im Uhrzeigersinn, aus der weiteren Materialbahn 23 herausgedreht wurden wie die Auflageplateaus 8. Daher ist diese Sandwich-Konstruktion durch Ausüben einer Kompressionskraft, die eine gewisse Schwelle überschreitet, wieder komprimierbar, selbst wenn die Auflageplateaus 8 und die weiteren Auflageplateaus 28 aneinander fixiert sind. Diese Funktionalität besteht wegen des im Vergleich anders orientierten Drehsinns der Auflageplateaus der beiden Abstandsstrukturen bei der Ausführungsform gemäß Fig. 21 nicht. Wenn diese kontrolliert einstellbare Kompressions-Funktionalität nicht gewünscht ist, besteht die Möglichkeit im Aufbau gemäß Fig. 22 zwischen den Auflageplateaus 8 und den weiteren Auflageplateaus 28 ein flächiges weiteres Element an der ersten Abstandsstruktur und an der weiteren Abstandsstruktur starr zu fixieren. Diese Variante ist jedoch nicht in den Figuren gezeigt.

Fig. 23 zeigt eine perspektivische Ansicht einer Sandwich-Konstruktion gemäß einer sechsten Ausführungsform. Diese Sandwich-Konstruktion entspricht der in Fig. 21 gezeigten Sandwich-Konstruktion mit dem Unterschied, dass die beiden Abstandsstrukturen an den Materialbahnen 3 der ersten Abstandsstruktur und den weiteren Materialbahnen 23 der weiteren Abstandsstruktur in der Mitte der Sandwich-Konstruktion gefügt sind und die Auflageplateaus 8, 28 der beiden Abstandsstrukturen von der Mitte der Sandwich-Konstruktion weg nach außen gerichtet sind. Die Auflageplateaus 8 sind mit einem Abdeckelement 9 und die in dieser Darstellung verdeckten weiteren Auflageplateaus 28 sind mit einem weiteren Abdeckelement 29 verbunden.

Fig. 24 zeigt eine perspektivische Ansicht einer Sandwich-Konstruktion gemäß einer siebten Ausführungsform. Die in Fig. 24 gezeigte Sandwich-Konstruktion entspricht der in Fig. 23 gezeigten Sandwich-Konstruktion mit dem Unterschied, dass die Auflageplateaus 8 einen im Vergleich zur Fig. 23 gegenläufigen Drehsinn aufweisen.

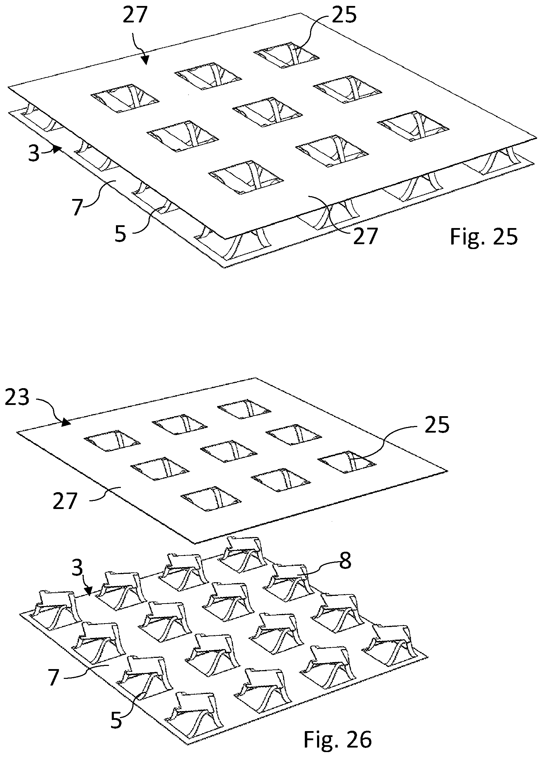

Fig. 25 zeigt eine perspektivische Ansicht einer Sandwich-Konstruktion gemäß einer achten Ausführungsform. Die in Fig. 25 gezeigte Ausführungsform besteht aus einer ersten unteren Abstandsstruktur und einer weiteren oberen Abstandsstruktur, die ineinander verschachtelt sind. Die Auflageplateaus 8 der ersten Abstandsstruktur sind für sich betrachtet ausgebildet, wie die in Figur 19 gezeigte Abstandsstruktur mit dem Unterschied, dass die Dichte der Auflageplateaus 8 in der ersten Ebene 7 geringer ist und somit ein größerer Abstand zwischen den Auflageplateaus 8 herrscht. Dies ist in Figur 26 zu erkennen, die die Sandwich-Konstruktion aus Figur 25 in einer Explosionsdarstellung zeigt. Durch den die verschachtelten Struktur der ineinander greifenden Abstandsstrukturen kommen die Auflageplateaus 8 der ersten Abstandsstruktur auf der weiteren ersten Ebene 27 der weiteren Abstandsstruktur zu liegen und werden dort fixiert. Entsprechend kommen die hier verdeckten und daher nicht sichtbaren weiteren Auflageplateaus 28 der weiteren Abstandsstruktur auf der ersten Ebene 7 zu liegen und werden dort fixiert. Diese Struktur liegt dann als sehr kompakte und gleichzeitig robuste Sandwich-Konstruktion vor.

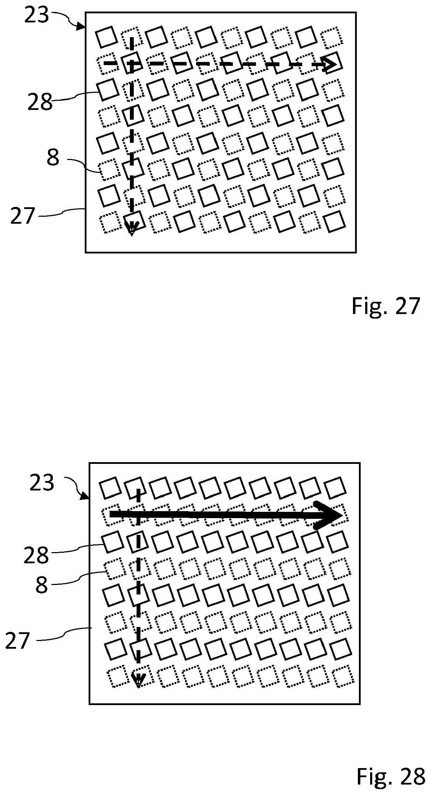

Die Fig. 27 bis 29 zeigen schematische Draufsichten auf Sandwich-Konstruktionen gemäß weiterer Ausführungsformen, die allesamt aus zwei Abstandsstrukturen mit ineinander verschachtelten Auflageplateaus aufgebaut sind. Die Auflageplateaus 8 der ersten Abstandsstruktur sind gestrichelt gezeigt, die weiteren Auflageplateaus 28 der weiteren Abstandsstruktur sind mit durchgezogenen Strichen gezeichnet. Für die Flächen-Anordnung der Auflageplateaus 8,28 in der Aufsicht betrachtet ergeben sich eine Vielzahl von Möglichkeiten, von denen in den Fig. 27 bis 29 beispielhaft einige gezeigt sind.

Gemäß Fig. 27 liegt die Anordnung der Auflageplateaus 8 und der weiteren Auflageplateaus 28 reihenweise alternieren vor, so dass sie Schachbrettmusterartig angeordnet sind. Die Materialbahn der ersten Ebene (nicht gezeigt) und die in der weiteren ersten Ebene 27 liegende Materialbahn 23 bilden Gurte, die immer abwechselnd durch die Löcher unterbrochen sind, wie durch die gestrichelten Pfeile verdeutlicht ist.

Der Vorteil einer Sandwich-Konstruktion mit verschachtelten Abstandstrukturen besteht darin, dass diese Sandwich-Konstruktion mit zwei Abstandsstrukturen strukturell symmetrisch aufgebaut ist und beide Deckschichten der Sandwich-Konstruktion die gleiche Stabilität aufweisen. Bei der Schachbrett-Anordnung ist die Sandwich-Konstruktion in beide Erstreckungsrichtungen gleich biegesteif.

Gemäß Fig.28 sind die Auflageplateaus 8 und die weiteren Auflageplateaus 28 streifenförmig angeordnet sind, d.h., in einer Erstreckungsrichtung der Sandwich-Konstruktion beginnen benachbarte Reihen mit Auflageplateaus aus der gleichen Materialbahn. Bei der streifenförmigen Anordnung entstehen zwischen den Vertiefungen, die durch die umgeformte Materialbahn oder die weitere Materialbahn gebildet werden, breite Materialbahnen in Form von Gurten. Dies wird durch den durchgezogenen Pfeil verdeutlicht. Dort entstehen zwischen den Öffnungen der Abstandsstrukturen breite Materialbahnen in Form von Gurten, die Zug und Druckkräfte gut aufnehmen können. Bei dieser streifenförmigen Anordnung ist in der Richtung der Gurte die Sandwich-Konstruktion viel biegesteifer als in der Richtung, die immer abwechselnd durch die Öffnungen unterbrochen ist, wie durch den gestrichelten Pfeil verdeutlicht ist.

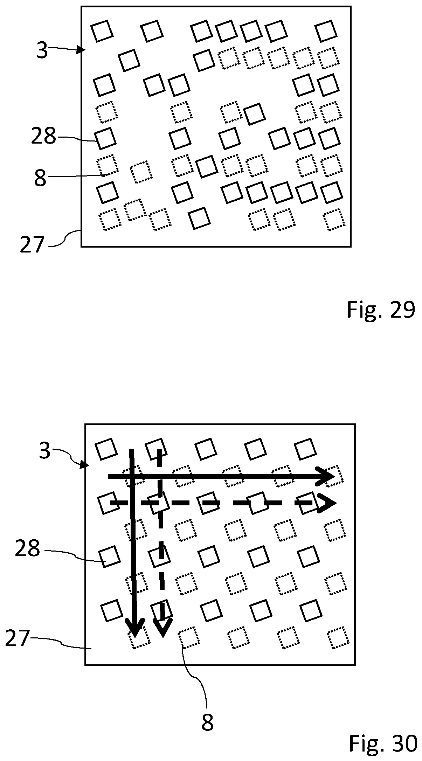

Gemäß Fig. 29 sind die Auflageplateaus 8 und die weiteren Auflageplateaus 28 nicht periodisch und ungleichmäßig angeordnet. Dies kann durch die jeweiligen Anforderungen der größeren Struktur vorgegeben sein, in dies das Sandwich-Element verbaut wird.

Die Sandwich-Konstruktion gemäß Fig. 30 ist mit einer anderen Anzahl und Dichte an Auflageplateaus 8 und weiteren Auflageplateaus 28 ausgebildet. Wird die Anzahl der Auflageplateaus 8 und der weiteren Auflageplateaus 28 pro Flächeneinheit reduziert, d.h. der Abstand zwischen benachbarten Strukturen vergrößert, wie in Fig. 25 und 26 im Vergleich zur Fig. 22 gezeigt, entstehen in der ersten Ebene 7 und der weiteren ersten Ebene 27 Streifen, gebildet aus durchgehenden Materialbahnen in Form von Gurten in beiden Erstreckungsrichtungen der flächig ausgedehnten Sandwich-Konstruktion. Diese Streifen sind nicht von Öffnungen unterbrochen. Das macht die erste Ebene 7 und die weitere Ebene 27 der Sandwich-Konstruktion besonders zug- und druckstabil. Die Gurte der ersten Ebene 7 und der weiteren ersten Ebene 27 sind gegeneinander seitlich versetzt, wobei die durchgezogenen Pfeile die Gurte der Materialbahn 3 verdeutlichen, die aus der Materialbahn der Abstandsstruktur geformt wurden und die gestrichelten Pfeile die Gurte zeigen, die aus der weiteren Materialbahn 23 der weiteren Abstandsstruktur geformt sind.

### Bezugszeichenliste:

- α: Verdrehungswinkel
- γ: Schnittwinkel
- E: Erstreckungsrichtung
- 1: Schnitt
- 2: erster Schenkel
- 3: Materialbahn
- 4: zweiter Schenkel
- 5: Beabstandungselement
- 7: erste Ebene
- 8: Auflageplateau
- 9: Abdeckelement
- 10: dritter Schenkel
- 11: Bohrloch
- 12: Sicke
- 13: Rolle, Coil
- 14: Fügestelle
- 15: Walze
- 16: weitere Walze
- 17: Bearbeitungsstation
- 18: zweite Ebene
- 23: weitere Materialbahn
- 25: weiteres Beabstandungselement
- 27: weitere erste Ebene
- 28: weiteres Auflageplateau
- 29: weiteres Abdeckelement

## Patentansprüche

1. Abstandsstruktur für eine Sandwich-Konstruktion, gebildet aus einer mit einer Mehrzahl von Schnitten (1) versehenen Materialbahn (3) aufweisend eine Materialbahnebene als eine erste Ebene (7), wobei durch Umformen der Materialbahn (3) abschnittsweise eine Mehrzahl zu der ersten Ebene (7) beabstandete und in einer zweiten Ebene angeordnete Auflageplateaus (8) gebildet ist, wobei im Übergangsbereich von der ersten Ebene (7) in die zweite Ebene Beabstandungselemente (5) jeweils entlang einer Erstreckungsrichtung (E) von der ersten Ebene (7) in die zweite Ebene verlaufen und somit die Beabstandungselemente (5) die erste Ebene (7) von den Auflageplateaus (8) beabstanden,
**dadurch gekennzeichnet, dass**
durch das als Biegen der Auflageplateaus (8) aus der ersten Ebene (7) heraus durchgeführte Umformen der Materialbahn (3) zum einen die Auflageplateaus (8) in Relation zur ersten Ebene (7) verdreht sind und zum anderen die Beabstandungselemente (5) entlang ihrer Erstreckungsrichtung (E) eine um deren Erstreckungsrichtung (E) ausgebildete Verwindung aufweisen.

2. Abstandsstruktur für eine Sandwich-Konstruktion gemäß Anspruch 1, **dadurch gekennzeichnet, dass** die aus der Materialbahn (3) herausgebogenen Auflageplateaus (8) in der Aufsicht auf die erste Ebene (7) eine Verdrehung von >5°, bevorzugt >10°, bevorzugter >20°, noch bevorzugter >30° zur ersten Ebene (7) aufweisen.

3. Abstandsstruktur für eine Sandwich-Konstruktion gemäß Anspruch 1 oder 2, **dadurch gekennzeichnet, dass** die Auflageplateaus (8) einen Plateau-Umfang aufweist und die Beabstandungselemente (5) entlang des Plateau-Umfangs mit einer Abweichung von weniger als 20 Grad, bevorzugt weniger als 10 Grad, bevorzugter weniger als 5 Grad gleichverteilt angeordnet sind.

4. Abstandsstruktur für eine Sandwich-Konstruktion gemäß einem der vorangehenden Ansprüche, **dadurch gekennzeichnet, dass** jeder Schnitt (1) einen ersten Schenkel (2) und einen zweiten Schenkel (4) aufweist, wobei der erste Schenkel (2) in den zweiten Schenkel (4) übergeht und zwischen einer Erstreckungsrichtung des ersten Schenkels (2) und einer Erstreckungsrichtung des zweiten Schenkels (4) ein Schnittwinkel (γ) eingeschlossen ist, wobei die Schnitte (1) um jeweils ein Auflageplateau (8) herum angeordnet sind.

5. Abstandsstruktur für eine Sandwich-Konstruktion gemäß Anspruch 4, **dadurch gekennzeichnet, dass** der Schnittwinkel (γ) im Bereich von 40 bis 140 Grad, bevorzugt von 60 bis 120 Grad liegt.

6. Abstandsstruktur für eine Sandwich-Konstruktion gemäß Anspruch 4 oder 5, **dadurch gekennzeichnet, dass** der erste Schenkel (2) als langer erster Schenkel ausgebildet ist, im Vergleich zu dem zweiten Schenkel (4), der als kurzer zweiter Schenkel ausgebildet ist.

7. Abstandsstruktur für eine Sandwich-Konstruktion gemäß Anspruch 6, **dadurch gekennzeichnet, dass** die Schnitte (1) vom langen ersten Schenkel (2) zum kurzen zweiten Schenkel (4) hin betrachtet eine gleiche Drehrichtung aufweisen, die im Uhrzeigersinn oder entgegen dem Uhrzeigersinn orientiert ist.

8. Abstandsstruktur für eine Sandwich-Konstruktion gemäß einem der Ansprüche 6 oder 7, **dadurch gekennzeichnet, dass** in der Materialbahn (3) zwischen dem einen langen ersten Schenkel (2) eines Schnittes (1) und dem Auflageplateau (8) der kurze zweite Schenkel (4) eines benachbarten Schnittes (1) angeordnet ist, wobei die Beabstandungselemente (5) zwischen den langen ersten Schenkeln (2) und benachbarten kurzen zweiten Schenkeln (4) ausgebildet sind.

9. Sandwich-Konstruktion, aufweisend eine Abstandsstruktur gemäß einem der vorangehenden Ansprüche und ein Abdeckelement (9), das an den Auflageplateaus (8) befestigt ist.

10. Sandwich-Konstruktion gemäß Anspruch 9, **dadurch gekennzeichnet, dass** das Abdeckelement (9) als ebene Fläche oder als ein- oder mehrfach gekrümmte Fläche ausgebildet ist, wobei die Abstandsstruktur eine Vielzahl identischer oder unterschiedlich ausgebildeter Abstandsplateaus (8) aufweist.

11. Verfahren zur Herstellung einer Abstandsstruktur gemäß einem der Ansprüche 1 bis 8, aufweisend folgende Schritte:
- Bereitstellen einer Materialbahn (3) ausbildend eine erste Ebene (7);
- Herstellen von Schnitten (1) mit einem ersten Schenkel (2) und einem an den ersten Schenkel (2) anschließenden zweiten Schenkel (4) in der Materialbahn (3), wobei die Schnitte (1) derart angeordnet sind, dass eine Vielzahl Auflageplateaus (8) entlang einer Drehrichtung senkrecht zur Materialbahn (3) betrachtet von den Schnitten (1) umschlossen wird und wobei von den Auflageplateaus (8) betrachtet erste Schenkel (2) und zweite Schenkel (4) einander in Drehrichtung folgender Schnitte (1) parallel oder in einem spitzen Winkel derart zueinander verlaufen, dass dadurch in der Materialbahn (3) Beabstandungselemente (5) ausgebildet werden, die zwischen den Auflageplateaus (8) und der umgebenen ersten Ebene (7) der Materialbahn (3) verlaufen,
**gekennzeichnet durch**
- ein Biegen der Materialbahn (3) im Bereich der Auflageplateaus (8) derart, dass zum einen die Auflageplateaus (8) von der ersten Ebene (7) beabstandet und in Relation zur ersten Ebene verdreht und zum anderen die Beabstandungselemente (5) durch das Biegen um ihre Erstreckungsrichtung (E) verwunden werden.

12. Verfahren gemäß einem Anspruch 11, **dadurch gekennzeichnet, dass** der erste Schenkel (2) der Schnitte (1) als langer erster Schenkel ausgebildet ist, im Vergleich zum zweiten Schenkel (4), der als kurzer zweiter Schenkel ausgebildet ist und die Schnitte (1) derart in die Materialbahn (3) eingebracht werden, dass sie vom langen ersten Schenkel (2) zum kurzen zweiten Schenkel (4) hin betrachtet eine gleiche Drehrichtung aufweisen, die im Uhrzeigersinn oder entgegen dem Uhrzeigersinn orientiert ist.

13. Verfahren gemäß einem der Ansprüche 11 oder 12, **dadurch gekennzeichnet, dass** das Einbringen der Schnitte (1) in die Materialbahn (3) mittels Scherschneiden, Laserschneiden, Wasserstrahlschneiden oder Ausstanzen erfolgt.

14. Verfahren gemäß einem der Ansprüche 11 bis 13, **dadurch gekennzeichnet, dass** im Anschluss an das Biegen der Materialbahn (3) ein Tiefziehschritt und/oder ein Biegeschritt durchgeführt wird, um die räumliche Lage des Auflageplateaus (8) zu verändern.

15. Verfahren gemäß einem der Ansprüche 11 bis 14, **dadurch gekennzeichnet, dass** es als in-line-Verfahren mittels einer Rotationsstanze und einer nachfolgenden Ausbiegevorrichtung durchgeführt wird.

## Claims

1. A spacer structure for a sandwich construction, formed from a material web (3) which is provided with a plurality of cuts (1) and has a material web plane as a first plane (7), wherein a plurality of bearing surfaces (8),which are spaced apart from the first plane (7) and are disposed in a second plane, are formed in portions by a forming process of the material web (3), wherein spacing elements (5) in the transition region from the first plane (7) to the second plane run in each case along a direction of extent (E) from the first plane (7) into the second plane, and the spacing elements (5) thus spacing apart the first plane (7) from the bearing surfaces (8),
**characterized in that**
by the forming process of the material web (3), which is carried out by bending the bearing surfaces (8) out of the first plane (7), the bearing surfaces (8) are twisted in relation to the first plane (7), on the one hand, and the spacing elements (5) along the direction of extent (E) thereof have distortions that are configured about the direction of extent (E) of said spacing elements (5), on the other hand.

2. The spacer structure for a sandwich construction as claimed in claim 1, **characterized in that** the bearing surfaces (8) that are bent out of the material web (3) in the plan view from above of the first plane (7) have a twist of > 5°, preferably > 10°, more preferably > 20°, even more preferably > 30° in relation to the first plane (7).

3. The spacer structure for a sandwich construction as claimed in claim 1 or 2, **characterized in that** the bearing surfaces (8) have a surface circumference, and the spacing elements (5) are uniformly distributed along the surface circumference with a variance of less than 20 degrees, preferably less than 10 degrees, preferably less than 5 degrees.

4. The spacer structure for a sandwich construction as claimed in one of the preceding claims, **characterized in that** each cut (1) has a first leg (2) and a second leg (4), wherein the first leg (2) transitions to the second leg (4), and a cutting angle (γ) is enclosed between a direction of extent of the first leg (2) and a direction of extent of the second leg (4), wherein the cuts (1) are in each case disposed about one bearing surface (8).

5. The spacer structure for a sandwich construction as claimed in claim 4, **characterized in that** the cutting angle (γ) is in the range from 40 to 140 degrees, preferably from 60 to 120 degrees.

6. The spacer structure for a sandwich construction as claimed in claim 4 or 5, **characterized in that** the first leg (2) is configured as a long first leg, as opposed to the second leg (4) which is configured as a short second leg.

7. The spacer structure for a sandwich construction as claimed in claim 6, **characterized in that** the cuts (1), when viewed from the long first leg (2) toward the second short leg (4), have an identical sense of rotation which is oriented in the clockwise direction or in the counterclockwise direction.

8. The spacer structure for a sandwich construction as claimed in one of claims 6 or 7, **characterized in that** in the material web (3) the short second leg (4) of an adjacent cut (1) is disposed between the one long first leg (2) of a cut (1) and the bearing surface (8), wherein the spacing elements (5) are configured between the long first legs (2) and adjacent short second legs (4).

9. A sandwich construction, having a spacer structure as claimed in one of the preceding claims, and a covering element (9) which is fastened to the bearing surfaces (8).

10. The sandwich construction as claimed in claim 9, **characterized in that** the covering element (9) is configured as a flat face or as a face with one or a plurality of curvatures, wherein the spacer structure preferably a multiplicity of bearing surfaces (8) of identical or dissimilar configuration.

11. A method for producing a spacer structure as claimed in one of claims 1 to 8, said method comprising the following steps:
- providing a material web (3) that configures a first plane (7);
- producing cuts (1) having a first leg (2) and a second leg (4), which adjoins the first leg (2), in the material web (3), wherein the cuts (1) are disposed in such a manner that a multiplicity of bearing surfaces (8), when viewed along a rotation direction perpendicular to the material web (3), are enclosed by the cuts (1), and wherein, when viewed from the bearing surfaces (8), first legs (2) and second legs (4) of successive cuts (1) in the rotation direction run in parallel or at an acute angle in relation to one another in such a manner that, as a result, spacing elements (5) which run between the bearing surfaces (8) and the surrounding first plane (7) of the material web (3) are configured in the material web (3),
**characterized by**
- bending the material web (3) in the region of the bearing surfaces (8) in such a manner that the bearing surfaces (8) are spaced apart from the first plane (7) and twisted in relation to the first plane, on the one hand, and the spacing elements (5) are distorted about the direction of extent (E) thereof by the bending, on the other hand.

12. The method as claimed in claim 11, **characterized in that** the first leg (2) of the cuts (1) is configured as a long first leg, as opposed to the second leg (4) which is configured as short second leg, and the cuts (1) are incorporated into the material web (3) in such a manner that said cuts (1), when viewed from the long first leg (2) toward the short second leg (4), have an identical rotation direction which is oriented in the clockwise direction or the counterclockwise direction.

13. The method as claimed in one of claims 11 or 12, **characterized in that** the incorporating of cuts (1) into the material web (3) is performed by means of blade cutting, laser cutting, waterjet cutting or punching.

14. The method as claimed in one of claims 11 to 13, **characterized in that**, following the bending of the material web (3), a deep drawing step and/or a bending step are/is carried out so as to change the spatial position of the bearing surface (8).

15. The method as claimed in one of claims 11 to 14, **characterized in that** said method is carried out as an in-line method by means of a rotary die cutter and a downstream lateral buckling device.

## Revendications

1. Une structure d'espacement pour une construction sandwich, formée à partir d'une bande de matériau (3) munie d'une pluralité d'incisions (1), ayant un niveau de bande de matériau comme premier plan (7), dans laquelle une pluralité de plateaux de support (8) espacée du premier plan (7) et disposée dans un deuxième plan est formée par sections par formage de la bande de matériau (3), dans laquelle dans la zone de transition du premier plan (7) au deuxième plan des éléments d'espacement (5) s'étendent chacun le long d'une extension direction (E) du premier plan (7) dans le deuxième plan et ainsi les éléments d'espacement (5) espacent le premier plan (7) des plateaux de support (8),
**caractérisée en ce que**
par le formage de la bande de matériau (3) effectué par pliage des plateaux de support (8) dehors du premier plan (7) d'une part les plateaux de support (8) sont torsadés par rapport au premier plan (7) et d'autre part les éléments d'espacement (5) présentent le long de leur direction d'extension (E ) une torsion formée autour de la direction d'extension (E ) de ceux-ci.

2. La structure d'espacement pour une construction sandwich selon la revendication 1, **caractérisée en ce que** les plateaux de support (8) pliés à partir de la bande de matériau (3) présentent en vue de dessus sur le premier plan (7) une torsion >5°, de préférence >10°, plus préférentiellement >20°, encore plus préférentiellement >30° par rapport au premier plan (7).

3. La structure d'espacement pour une construction sandwich selon la revendication 1 ou 2, **caractérisée en ce que** les plateaux de support (8) présentent une circonférence de plateau et les éléments d'espacement (5) sont disposés de manière égale le long de la circonférence de plateau avec un écart inférieur à 20 degrés, de préférence inférieur à 10 degrés, plus préférentiellement inférieur à 5 degrés.

4. La structure d'espacement pour construction sandwich selon l'une des revendications précédentes, **caractérisée en ce que** chaque incision (1 ) présente une première branche (2) et une deuxième branche (4), la première branche (2) étant en continuité avec la deuxième branche (4) et un angle d'incision (γ) est compris entre une direction d'extension de la première branche (2) et une direction d'extension de la deuxième branche (4), les incisions (1) étant disposées autour d'un plateau de support (8).

5. La structure d'espacement pour construction sandwich selon la revendication 4, **caractérisée en ce que** l'angle d'incision (γ) est compris dans la plage de 40 à 140 degrés, de préférence de 60 à 120 degrés.

6. La structure d'espacement pour une construction sandwich selon la revendication 4 ou 5, **caractérisée en ce que** la première branche (2) est formée comme une première branche longue par rapport la deuxième branche (4) qui est formée comme une deuxième branche courte.

7. La structure d'espacement pour construction sandwich selon la revendication 6, **caractérisée en ce que** les incisions (1) vues depuis la première branche (2) longue jusqu'à la seconde branche (4) courte ont le même sens de rotation qui est orientée dans le sens des aiguilles d'une montre ou dans le sens inverse des aiguilles d'une montre.

8. La structure d'espacement pour une construction sandwich selon l'une des revendications 6 ou 7, **caractérisée en ce que** dans la bande de matériau (3) entre la première branche longue (2) d'une incision (1) et le plateau de support (8), la deuxième branche courte (4) d'une incision adjacente (1) est disposée, les éléments d'espacement (5) étant formés entre les premières branches (2) longues et les deuxièmes branches (4) courtes adjacentes.

9. La construction sandwich comprenant une structure d'espacement selon l'une des revendications précédentes et un élément de couverture (9) qui est fixé sur les plateaux de support (8).

10. La construction sandwich selon la revendication 9, **caractérisée en ce que** l'élément de recouvrement (9) est formé sous forme de surface plane ou de surface courbée unique ou multiple, la structure d'espacement présentant une pluralité de plateaux d'espacement (8) identiques ou de formes différentes.

11. Le procédé de réalisation d'une structure d'espacement selon l'une des revendications 1 à 8, comprenant les étapes suivantes :
- fournir une bande de matière (3) formant un premier plan (7) ;
- réaliser des incisions (1) ayant une première branche (2) et une deuxième branche (4) connectant la première branche (2) dans la bande de matériau (3), dans lequel les incisions (1) sont disposées de telle sorte qu'une pluralité de plateaux de support (8) sont enfermée par les incisions (1) vue le long d'un sens de rotation perpendiculaire à la bande de matériau (3) et dans lequel, vues depuis les plateaux de support (8), les premières branches (2) et les deuxièmes branches (4) s'étendent parallèlement l'un à l'autre dans la direction de rotation des incisions ultérieures (1) ou selon un angle aigu de telle sorte que des éléments d'espacement (5) qui s'étendent entre les plateaux de support (8) et le premier plan (7) entouré de la bande de matériau (3) sont formés dans la bande de matériau (3),
**caractérisé par**
- plier la bande de matériau (3) dans la zone des plateaux de support (8) de telle sorte que d'un part les plateaux de support (8) sont espacés du premier plan (7) et tordus par rapport au premier plan et d'autre part les éléments d'espacement (5) sont vrillés par pliage autour de leur direction d'extension (E).

12. Le procédé selon la revendication 11, **caractérisé en ce que** la première branche (2) des incisions (1) est formée comme une première branche longue par rapport à la deuxième branche (4) qui est formée comme une deuxième branche courte et les incisions (1) sont introduits dans la bande de matériau (3) de telle sorte que, vus depuis la première branche longue (2) jusqu'à la seconde branche courte (4), ils ont le même sens de rotation, qui est orienté dans le sens des aiguilles d'une montre ou dans le sens inverse des aiguilles d'une montre.

13. Le procédé selon l'une des revendications 11 ou 12, **caractérisé en ce que** les incisions (1) sont réalisées dans la bande de matériau (3) au moyen d'incisions par cisaillement, d'incision au laser, d'incision au jet d'eau ou de poinçonnage.

14. Le procédé selon l'une des revendications 11 à 13, **caractérisé en ce que** suite au pliage de la bande de matériau (3), on effectue une étape d'emboutissage profond et/ou une étape de pliage afin de modifier la position spatiale du plateau de support (8).

15. Le procédé selon l'une des revendications 11 à 14, **caractérisé en ce qu'**il est réalisé comme procédé en ligne à l'aide d'un poinçon rotatif suivi d'un dispositif de pliage.
